# EUROPÄISCHE PATENTSCHRIFT

(11) **EP 2 251 231 B1**
(45) Veröffentlichungstag und Bekanntmachung des Hinweises auf die Patenterteilung: **23.05.2012**
(21) Anmeldenummer: 10161009.5
(22) Anmeldetag: 26.04.2010
(51) Int. Cl.: B60R 13/08

(54) **Leichte, schallisolierende Verkleidung für ein Karosserieteil oder für eine Komponente eines Kraftfahrzeugs und Verfahren zu deren Herstellung**
Light, acoustically insulating cladding for a bodywork section or for a component of a motor vehicle and its method for producing
Habillage léger et insonorisant pour un élément de carrosserie ou pour un composant d'un véhicule automobile et son procédé de fabrication

(30) Priorität: 12.05.2009 DE 102009020995
(43) Veröffentlichungstag der Anmeldung: 17.11.2010
(73) Patentinhaber: Dr. Freist Automotive Bielefeld GmbH, 33611 Bielefeld (DE)
(72) Erfinder: Eggers, Dr. Lutz, 33659 Bielefeld (DE); Horst, Guido, 32257 Bünde (DE); Rettberg, Frank, 33615 Bielefeld (DE)
(74) Vertreter: Geitz Truckenmüller Lucht

(56) Entgegenhaltungen:
- EP-A2- 0 363 130
- WO-A1-2008/005728
- DE-A1-102005 041 707
- US-A1- 2008 073 146

## Beschreibung

Die Erfindung betrifft insbesondere eine leichte, schallisolierende Verkleidung für ein Karosserieteil eines Kraftfahrzeugs, insbesondere in Form einer leichten Stirnwandverkleidung, oder für eine im Motorraum eines Kraftfahrzeugs befindliche Komponente, insbesondere gemäß dem Oberbegriff des Anspruches 1, und betrifft ein Verfahren zur Herstellung einer derartigen Verkleidung, insbesondere gemäß dem Oberbegriff des Anspruches 8.

Herkömmliche Verkleidungen für ein Karosserieteil oder für eine Komponente für ein Kraftfahrzeug können aus einer schalldämmenden Schwerschicht und aus einer Schaumstoffschicht und/oder aus einer textilen Vliesschicht aufgebaut sein, wobei die Schaumstoff- und/oder Vliesschicht als elastische Feder und die Schwerschicht als Masse eines akustischen Feder-Masse-Systems wirken können. Als Schwerschicht können beispielsweise Matten bzw. Formkörper aus thermoplastischem Elastomer (TPE), Ethylen-Propylen-(Dien) -Copolymere (EPDM) oder Polyurethan (PUR) verwendet werden, die in der Regel Füllstoffe wie Bariumsulfat (BaSO₄) oder Kalziumcarbonat (CaCO₃) enthalten. Derartige Schwerschichten weisen eine vergleichsweise hohe Dichte und deshalb ein relativ hohes Gewicht auf. Als elastische Feder kann ein PUR-Weichschaumstoff und/oder eine Vliesschicht aus Polyester- oder Baumwollfasern verwendet werden, die in der Regel thermoplastisch oder duroplastisch gebunden sind.

Aus der WO 2007/096427 A1 und aus der DE 10 2007 020 832 A1 ist jeweils eine leichte, schallisolierende Verkleidung für ein Karosserieteil eines Kraftfahrzeugs in Form einer Stirnwandverkleidung und ein Verfahren zu dessen Herstellung bekannt geworden.

Im Falle der WO 2007/096427 A1 besteht die Stirnwandverkleidung im Wesentlichen aus einem in einem einstufigen Prozess geschäumten, schallabsorbierenden Formteil aus offenzelligem PUR-Weichschaum, welcher auf seiner einen Seite eine integrale, im Wesentlichen porenfreie Haut mit einer Dicke von mindestens 0,5 mm aufweist und auf seiner, der besagten Haut gegenüber liegenden Seite eine offenporige Oberfläche und/oder dünne schalldurchlässige Haut aufweist. Die integrale, im Wesentlichen porenfreie Haut kann partiell oder vollflächig mit einer aus einer Kunststofffolie, insbesondere Schaumstofffolie, oder einem Faservlies, insbesondere einem Volumenvlies, bestehenden Abdeckschicht versehen sein, wobei die integrale Haut durch Hinterspritzen der Abdeckschicht mit dieser stoffschlüssig verbunden ist. Die Abdeckschicht ist akustisch wirksam und kann aus einem dünnen Abdeckvlies (Faservlies) bestehen, das der Verkleidung ein schöneres Aussehen und/oder eine höhere mechanische Festigkeit, insbesondere Reißfestigkeit verleiht. Dieses Abdeckvlies bzw. Faservlies oder Volumenvlies kann aus Polyesterfasern, Baumwolle oder anderen Natur- oder Synthesefasern gebildet sein. Die integrale Haut ist mit der Abdeckschicht stoffschlüssig unmittelbar verbunden. Die stoffschlüssige Verbindung wird hergestellt, indem in ein Schäumwerkzeug ein Materialbahnabschnitt oder Zuschnitt einer Folie bzw. eines Faservlieses eingelegt wird, und zwar an den in einer unteren Werkzeughälfte vorgesehenen Oberflächenbereich eines Schäumwerkzeuges, in welchem die integrale, im Wesentlichen porenfreie Haut des geschäumten Formteils erzeugbar ist. Sodann wird die Folie bzw. das Faservlies mit einer Polyol und Isocyanat enthaltenden Reaktionsmischung hinterspritzt, und zwar derart, dass das Schäumwerkzeug bereichsweise unterschiedlich temperiert wird. Das Einspritzen der Reaktionsmischung kann in ein offenes oder in ein geschlossenes Schäumwerkzeug erfolgen. Das Einbringen der Weichschaum-Reaktionsmischung in das offene Schäumwerkzeug kann mittels einer als eine Art Einspritzdüse gestalteten Einspritzleitung erfolgen, die vorzugsweise durch einen Roboter geführt wird. Durch diese Einspritzleitung bildet sich ein seitlich aufgefächerter Sprühstrahl, dessen Hauptkomponente in einem bestimmten Winkel zu der Oberfläche der Kavität des Schäumwerkzeuges ausgerichtet sein kann. Bei diesem Herstellungsverfahren kann die Abdeckschicht insbesondere dann, wenn es sich um ein Faservlies handelt, beim Einspritzen des Reaktionsgemisches von dem Reaktionsgemisch durchdrungen werden, so dass dann die sich auf der Abdeckschicht ausbildende integrale und als Schalldämmschicht fungierende Hautschicht der Schaumstoffschicht im fertigen Formteil unter Schaumdurchschlag mit der Abdeckschicht stoffschlüssig verbunden ist.

Im Falle der DE 10 2007 020 832 A1 umfasst die Stirnwandverkleidung eine Schallabsorberschicht aus einem porösen Absorber, vorzugsweise aus Faservlies oder Schaumstoff, eine mit dem porösen Absorber direkt verbundene, im Wesentlichen luftdichte Schalldämmschicht und eine sich daran anschließende Schaumstoffschicht aus offenporigem Polyurethan-Weichschaum. Die Schalldämmschicht und die Schaumstoffschicht werden aus den gleichen Ausgangsmaterialien in einem einstufigen Prozess geschäumt und sind in der fertigen Verkleidung integral stoffschlüssig miteinander verbunden. Die Schalldämmschicht besteht ebenfalls aus einer integralen, mindestens 0,5 mm dicken Hautschicht der Schaumstoffschicht. Zur Vermeidung des vorstehend im Zusammenhang mit der WO 2007/096427 erwähnten Problems wurde in der DE 10 2007 020 832 A1 ein Verfahren angegeben, bei dem die Reaktionsmischung im Wesentlichen parallel zur Rückseite der Schallabsorberschicht und/oder parallel zur Bodenfläche einer Kavität des Schäumwerkzeuges in das Schäumwerkzeug eingebracht wird, wobei auch bei diesem Verfahren ein bestimmter Oberflächenteilbereich des Schäumwerkzeuges so temperiert wird und/oder während des Einbringens des Reaktionsgemisches das Mischungsverhältnis von Polyol zu Isocyanat so geändert wird, dass sich aus der Reaktionsmischung eine Schaumstoffschicht ergibt, welche die integrale, im Wesentlichen luftdichte, mindestens 0,5 mm dicke Hautschicht aufweist, die jedoch nunmehr verfahrensbedingt im Wesentlichen ohne Schaumstoffdurchschlag mit der Schallabsorberschicht stoffschlüssig verbunden ist. Dieses Verfahren ist vergleichsweise aufwändig und erfordert eine Befestigung des porösen Absorbers, beispielsweise des Faservlies, an der Unterseite eines Schäum-Oberwerkzeuges. Im Falle eines Einbringens des Reaktionsgemisches in das geöffnete Schäumwerkzeug muss das Einbringen des Reaktionsgemisches mittels spezieller Zuführkanäle, die sich im Unterwerkzeug befinden, derart erfolgen, dass zuerst kein Kontakt mit dem porösen Absorber besteht, die Reaktionsmischung das Faservlies also zunächst nicht berührt. Nachdem ein begrenztes bzw. vorbestimmtes Volumen der Reaktionsmischung in das Schäumwerkzeug eingebracht ist, wird das Schäumwerkzeug geschlossen. Beim Ausreagieren der Reaktionsmischung expandiert diese in der Kavität, so dass dabei das Faservlies praktisch auf dem aufsteigenden PUR-Weichschaum aufschwimmt, wodurch es zu einer direkten stoffschlüssigen Verbindung zwischen der Reaktionsmischung und dem Faservlies kommt. Alternativ kann das Reaktionsgemisch mit Hilfe von im Querschnitt T-förmig gestalteten, in Schließ- bzw. Öffnungsrichtung des Schäumwerkzeugs verschiebbaren Einspritzelementen in das geschlossene Schäumwerkzeug erfolgen, wobei die Einspritzelemente im Unterwerkzeug relativ zu diesem verschieblich gelagert sind. Die mit einem axial verschiebbaren Rohrteil gebildeten Einspritzelemente weisen an ihrem der Kavität des Schäumwerkzeuges zugewandten Ende jeweils ein rohrförmiges Umlenkelement auf, über die das die Polyol und Isocyanat enthaltende Reaktionsmischung gegenüber dem Rohrteil radial umgelenkt und im Wesentlichen parallel zur Rückseite des Faservlies in die Kavität eingespritzt wird, so dass die Reaktionsmischung im Wesentlichen nicht senkrecht auf das Faservlies gelangt. Die Einspritzvliesrichtung der Reaktionsmischung ist also im Wesentlichen parallel zur Oberfläche des Faservlieses bzw. zur Bodenfläche der Kavität des Schäumwerkzeuges ausgerichtet. Die Reinigung dieser speziellen Zuführkanäle bzw. Einspritzelemente, die mit dem regelmäßig klebrigen Reaktionsgemisch beaufschlagt werden, ist aufwändig. Diese Herstellungsverfahren sind vergleichsweise aufwändig und teuer, nicht nur, weil die Schäumwerkzeuge an sich aufwändig bzw. kompliziert sind, sondern auch weil eine spezielle Temperierung unterschiedlicher Oberflächenbereiche der Kavität des Schäumwerkzeuges zwingend erforderlich ist, was dementsprechend aufwändige Regelungs- und Qualitätssicherungsmaßnahmen erforderlich macht.

Es ist demgemäß eine Aufgabe der Erfindung, eine schallabsorbierende sowie schalldämmende Verkleidung, insbesondere eine Stirnwandverkleidung oder Getriebetunnelverkleidung, für ein Kraftfahrzeug bzw. einen entsprechenden Materialaufbau zur Verfügung zu stellen, die bzw. der ein geringes Gewicht aufweist und vergleichsweise kostengünstig, vorzugsweise in einem Einstufenverfahren (one-shot), insbesondere durch Hinterschäumen eines Schallabsorbers, vorzugsweise im Wesentlichen ohne Schaumdurchschlag, auch auf bestehenden Anlagen mit vergleichsweise geringen Investitionsmitteln, insbesondere mit vergleichsweise einfachen Werkzeugen bzw. ohne komplizierte Werkzeuge, herstellbar ist. Es ist ferner eine Aufgabe der Erfindung, ein kostengünstiges Verfahren zur Herstellung einer derartigen Verkleidung bzw. eines derartigen Materialaufbaus anzugeben.

Diese Aufgabe wird hinsichtlich der Verkleidung bzw. des Materialaufbaus insbesondere durch die Merkmale des Anspruches 1 gelöst.

Demgemäß betrifft die Erfindung insbesondere eine leichte, schallisolierende Verkleidung für ein Karosserieteil eines Kraftfahrzeugs, insbesondere in Form einer leichten Stirnwandverkleidung, oder für eine im Motorraum eines Kraftfahrzeugs befindliche Komponente, oder einen entsprechenden Materialaufbau, umfassend eine poröse erste Schicht, die einen luftdurchlässigen, porösen, ersten Schallabsorber, insbesondere in Form eines Faservlies, enthält und umfassend eine mit dem ersten Schallabsorber stoffschlüssig, vorzugsweise unmittelbar, verbundene, im Wesentlichen luftdichte, leichte Schalldämmschicht, die aus den Ausgangsmaterialien einer zweiten Schicht aus einem zweiten Schallabsorber aus, vorzugsweise offenzelligem, vorzugsweise in einem einstufigen Verfahren (one-shot) geschäumten, Schaumstoff, insbesondere aus Polyurethan-Weichschaumstoff, hergestellt ist, und wobei die Schalldämmschicht mit dem ersten Schallabsorber, vorzugsweise unmittelbar, insbesondere durch Hinterschäumen bzw. Hinterspritzen des ersten Schallabsorbers, insbesondere im Wesentlichen ohne Schaumdurchschlag, stoffschlüssig verbunden ist, und wobei der zweite Schallabsorber aus Schaumstoff auf der von dem ersten Schallabsorber weg weisenden Seite der Schalldämmschicht angeordnet ist, insbesondere sich an die Schalldämmschicht, vorzugsweise unmittelbar, anschließt, wobei zwischen dem zweiten Schallabsorber aus Schaumstoff und dem porösen ersten Schallabsorber eine poröse dritte Schicht aus einem aus thermoplastischen Fasern gebildeten, vorzugsweise dünnen, Spinnfaservlies angeordnet ist, das stoffschlüssig, vorzugsweise unmittelbar, mit dem zweiten Schallabsorber verbunden ist, und wobei das Schaummaterial des zweiten Schallabsorbers das poröse Spinnfaservlies durchdringt und, vorzugsweise in unmittelbar stoffschlüssiger Materialverbindung, in einem sich an das Spinnfaservlies auf dessen von dem zweiten Schallabsorber weg weisenden Seite, vorzugsweise unmittelbar, anschließenden Materialbereich der ersten Schicht, die poröse erste Schicht im Wesentlichen ohne Schaumdurchschlag durchsetzt, also in diese eingedrungen ist, und wobei das Material der porösen ersten Schicht in dem besagten Materialbereich, der von dem Schaummaterial des zweiten Schallabsorbers durchsetzt ist und dieses die poröse erste Schicht durchsetzende Schaummaterial, ggf. auch das Material des Spinnfaservlies und das dieses durchdringende Schaummaterial des zweiten Schallabsorbers, die Schalldämmschicht ausbilden.

Erfindungsgemäß ist also ein Spinnvlies als eine Zwischenlage genutzt. Dadurch kann in besonders einfacher Art und Weise und ohne dass eine aufwändige Temperaturdifferenz-Regelung erforderlich ist, nicht nur aus den Ausgangsmaterialien des als Schallabsorber dienenden Schaumstoffes eine Schalldämmschicht verwirklicht werden, sondern es kann auch ein übermäßiges Eindringen des teuren Schaummaterials in die poröse erste Schicht, bzw. das Faservlies, vermieden werden, so dass also ebenfalls ein Hinterschäumen ohne bzw. im Wesentlichen ohne Schaumdurchschlag möglich ist. Durch das partielle Eindringen des Reaktionsgemisches lässt sich eine leichte, geschlossene Schalldämmschicht verwirklichen, die gegenüber konventionellen Schwerschichten deutlich leichter ist. Erfindungsgemäß kann ein Materialaufbau realisiert werden, der aus einem Absorber-Masse-Absorber-Verbund gebildet ist.

Eine derartige Verkleidung bzw. ein derartiger Materialaufbau kann zur Schallisolation, insbesondere in einem Kraftfahrzeug, vorzugsweise zur Schallisolation einer Stirnwand auf deren Innenseite, also insbesondere auf der einem Fahrgastraum zugewandten Seite erfolgen. Eine derartige Verkleidung bzw. ein derartiger Materialaufbau kann, bevorzugt unter Einsatz von Mineralfaservliesen, auch im Motorraum eines Kraftfahrzeugs, also beispielsweise zur Verkleidung einer Stirnwand auf deren dem Motorraum zugewandten Außenseite oder zur Verkleidung eines Getriebetunnels oder von dergleichen Karosserieteilen oder zur Schallisolation von im Motorraum eines Kraftfahrzeugs befindlichen Komponenten, eingesetzt werden.

Eine derartige Verkleidung bzw. ein derartiger Materialaufbau kann mit Hilfe eines einstufigen, unkomplizierten Verfahrens, mit geringen Investitionsmitteln, auch auf bestehenden Anlagen, hergestellt werden. Es lassen sich Materialaufbauten bzw. Verkleidungen mit einem sehr geringen bzw. geringen Gewicht verwirklichen. Im Falle der Verwendung von Polyurethan-Weichschaum kann dieser ein minimales Raumgewicht von beispielsweise 35 Gramm/Liter aufweisen. Durch den Einsatz der Spinnvliesschicht als Zwischenschicht kann ein Schaumdurchschlag verhindert werden.

In aufwändigen Versuchen hat es sich überraschenderweise gezeigt, dass speziell ein aus thermoplastischen Fasern hergestelltes bzw. bestehendes dünnes thermoplastisches Spinnfaservlies, insbesondere ein Polypropylen-Spinnvlies, als Zwischenschicht besonders geeignet ist. Denn ein derartiges Spinnvlies kann eine Porosität aufweisen, welche ein Durchdringen des Spinnvlies und ein gewisses bzw. partielles Eindringen der Reaktionsmischung in die auf der anderen Seite des Spinnvlieses angeordnete poröse, insbesondere als Faservlies ausgebildete Schicht, ermöglicht, dessen Porosität jedoch andererseits hinreichend klein ist, um einen Schaumstoffdurchschlag, d. h. eine vollständige Durchdringung der porösen Schicht bzw. des Faservlies, zu vermeiden.

In vorteilhafter Ausgestaltung kann vorgesehen sein, dass das Material des Spinnfaservlies und das dieses durchdringende Schaummaterial des zweiten Schallabsorbers zusammen mit dem Material der porösen ersten Schicht in dem besagten Materialbereich, der von dem Schaummaterial des zweiten Schallabsorbers durchsetzt ist und dieses die poröse erste Schicht durchsetzende Schaummaterial eine gemeinsame Schalldämmschicht ausbilden, und wobei das mit dem Schaummaterial des zweiten Schallabsorbers durchdrungene Spinnfaservlies und das Material des besagten Materialbereichs der porösen ersten Schicht, die von dem Schaummaterial des zweiten Schallabsorbers durchsetzt ist, unmittelbar miteinander verbunden sind. Dadurch lassen sich in besonders kostengünstiger Art und Weise dementsprechend kostengünstige Verkleidungen bzw. Materialaufbauten verwirklichen, wobei sich überraschenderweise gezeigt hat, dass auch ohne die Verwendung von eine hohe Dichte aufweisenden Füllstoffen bzw. ohne die Verwendung von herkömmlichen Schwerschichten, dennoch nicht nur eine sehr gute Schallabsorption bzw. Luftschalldämpfung, sondern auch eine überraschend gute Luft- und/oder Körperschalldämmung erreicht werden kann.

In vorteilhafter Weiterbildung kann vorgesehen sein, dass das Spinnfaservlies bzw. die daraus gebildete Schicht eine Dicke im Bereich von 0,1 bis 3 mm, vorzugsweise im Bereich von 0,1 bis 1 mm, insbesondere von 0,2 bis 0,6 mm, beispielsweise von 0,3 bis 0,4 mm aufweist. Es kann also vorzugsweise ein dünnes Spinnfaservlies bzw. eine daraus gebildete dünne Schicht eingesetzt werden. Dadurch lässt sich einerseits eine ausreichende Durchdringung des Spinnvlies und andererseits ein hinreichend geringes Eindringen des Schaummaterials in die sich anschließende poröse, insbesondere als Faservlies ausgebildete Schicht verwirklichen.

Alternativ oder zusätzlich kann zu demselben Zwecke vorgesehen sein, dass das Spinnfaservlies bei einem Prüfdruck bzw. bei einem Differenz-Prüfdruck von 200 Pa eine, beispielsweise nach DIN EN ISO 9237 gemessene, Luftdurchlässigkeit im Bereich von 500 bis 2.000 L/m²s bzw. mm/s, vorzugsweise im Bereich von 800 bis 1.500 L/m²s bzw. mm/s, insbesondere im Bereich von 1.000 bis 1.200 L/m²s bzw. mm/s aufweist und/oder dass das Spinnfaservlies einen, beispielsweise nach DIN EN 29053, Verfahren B gemessenen, Strömungswiderstand im Bereich von 15 bis 400 Ns/m³, vorzugsweise im Bereich von 100 bis 250 Ns/m³, insbesondere im Bereich von 110 bis 150 Ns/m³, aufweist.

Ein derartiges Spinnfaservlies bzw. die daraus gebildete poröse Schicht weist bevorzugt ein Flächengewicht von 15 bis 150 g/m², vorzugsweise von 40 bis 90 g/m², insbesondere von 50 bis 70 g/m², beispielsweise im Bereich von 60 g/m² auf.

Das Spinnfaservlies kann aus Polyesterfasern und/oder aus Polypropylenfasern bestehen. Bei Verwendung eines Polyurethan-Weichschaumes für den einen Schallabsorber und bei Verwendung eines Baumwollfaservlies für den anderen Schallabsorber werden Polypropylenfasern für das Spinnvlies bevorzugt.

Das Spinnfaservlies kann auf die poröse erste Schicht aufkaschiert, beispielsweise aufgeklebt sein. Besonders bevorzugt kann das Spinnfaservlies auf der porösen ersten Schicht thermisch fixiert sein bzw. werden. Dies ermöglicht eine vorteilhafte Handhabung und eine kostengünstige Herstellung der Verkleidung bzw. des Materialaufbaus.

In besonders bevorzugter Weiterbildung kann vorgesehen sein, dass das Spinnfaservlies vor dem Einlegen in ein Schäumwerkzeug und/oder vor dem Eindringen des Schaumstoffmaterials des zweiten Schallabsorbers auf die poröse erste Schicht aufkaschiert, insbesondere auf der porösen ersten Schicht thermisch fixiert ist bzw. wird. Dadurch lassen sich die vorgenannten Vorteile noch weiter verbessern.

Gemäß einer besonders bevorzugten Weiterbildung kann die poröse erste Schicht, vorzugsweise auch der poröse erste Schallabsorber, aus einem Faservlies aus Baumwollfasern oder aus Polyesterfasern oder aus Baumwolle-Polyester-Mischfasern oder aus Mineralfasern, insbesondere aus Glasfasern, gebildet sein oder bestehen. Baumwollfasern insbesondere reine Baumwollfasern, also ungebundene Baumwollfasern, können besonders vorteilhaft sein. Dies ermöglicht hervorragende Verbundeigenschaften bei besonders günstigen Materialpreisen. Die Fasern des Faservlies können bevorzugt nicht thermoplastisch und/oder nicht duroplastisch gebunden sein, vorzugsweise ungebunden sein.

Gemäß einem bevorzugten Ausführungsbeispiel kann vorgesehen sein, dass die poröse erste Schicht, vorzugsweise auch der poröse erste Schallabsorber, insbesondere im Roh- bzw. Ausgangszustand, ein Flächengewicht von 500 bis 1.500 g/m², insbesondere von 700 bis 1.500 g/m², vorzugsweise von 600 oder 700 bis 1.000 g/m², aufweist bzw. aufweisen.

Ferner kann vorgesehen sein, dass der zweite Schallabsorber aus Polyurethan-Weichschaum besteht, der ein Raumgewicht bzw. eine Rohdichte von 30 bis 120 kg/m³, insbesondere von 35 bis 65 kg/m³, vorzugsweise von 45 bis 55 kg/m³, beispielsweise von 35 kg/m³ oder 50 kg/m³ aufweist.

Durch die vorgenannten Maßnahmen lässt sich eine besonders leichte, schallisolierende Verkleidung bzw. ein besonders leichter, schallisolierender Materialaufbau verwirklichen.

Abhängig von den gewünschten Anwendungs- bzw. Einsatzgebieten kann vorgesehen sein, dass der zweite Schallabsorber aus einem nicht-viskoelastischen Schaumstoff oder aus einem viskoelastischen Schaumstoff besteht.

Alternativ oder zusätzlich kann vorgesehen sein, dass der zweite Schallabsorber aus einem Schaumstoff besteht, der einen mechanischen Verlustfaktor von 0,15 bis 0,25, insbesondere von etwa 0,2 oder alternativ von mehr als 0,3, insbesondere von 0,35 bis 0,40, aufweist. Dadurch lassen sich besonders vorteilhafte mechanische und/oder absorbierende Eigenschaften der Verkleidung bzw. des Materialverbundes verwirklichen.

Bevorzugt kann auf den ersten Schallabsorber bzw. auf die poröse erste Schicht, vorzugsweise auf der von dem Spinnvlies weg weisenden Seite, eine dünne Deckschicht, insbesondere ein Abdeckfaservlies, vorzugsweise aus Polyesterfasern oder anderen synthetischen, insbesondere thermoplastischen Fasern und/oder eine Sperrfolie, beispielsweise eine Aluminiumfolie, insbesondere eine perforierte Aluminiumfolie, vorzugsweise eine mikroperforierte Aluminiumfolie, aufkaschiert sein bzw. werden. Dadurch lassen sich bestimmte funktionelle und/oder dekorative Eigenschaften erreichen.

Die leichte und im Wesentlichen luftdichte bzw. geschlossene Schalldämmschicht kann bevorzugt ein Raumgewicht bzw. eine Rohdichte im Bereich von 0,25 bis 0,5 g/cm³, insbesondere im Bereich von 0,3 bis 0,45 g/cm³, aufweisen. Die Schalldämmschicht kann alternativ oder zusätzlich ein Flächengewicht von 500 bis 2000 g/m², insbesondere von 900 bis 1.600 g/m² aufweisen.

Die Erfindung betrifft auch ein Verfahren zur Herstellung einer leichten, schallisolierenden, insbesondere die vorstehenden Merkmale und/oder die kennzeichnenden Merkmale eines oder mehrerer der Ansprüche 1 bis 7, aufweisenden, Verkleidung oder eines entsprechenden Materialaufbaus für ein Karosserieteil eines Kraftfahrzeugs, insbesondere für eine leichte Stirnwandverkleidung, oder für eine im Motorraum eines Kraftfahrzeugs befindliche Komponente, wobei eine poröse, vorzugsweise einen luftdurchlässigen, porösen, ersten Schallabsorber, enthaltende, insbesondere aus dem Material eines luftdurchlässigen, porösen, ersten Schallabsorbers bestehende, erste Schicht, insbesondere in Form eines Faservlies, in ein offenes Schäumwerkzeug eingebracht, vorzugsweise eingelegt, wird, das eine mit einer Bodenfläche begrenzte Kavität enthält, und wobei eine luftdurchlässige, poröse, weitere Schicht auf ihrer Rückseite mit einer Polyol und Isocyanat enthaltenden Reaktionsmischung, vorzugsweise direkt, hinterspritzt bzw. hinterschäumt wird, und wobei sich aus der Reaktionsmischung eine Schaumstoffschicht, insbesondere aus Polyurethan-Weichschaum, ergibt, die eine, vorzugsweise offenzellige, zweite Schicht aus einem Schallabsorber und eine im Wesentlichen luftdichte, leichte Schalldämmschicht aufweist, die mit der porösen weiteren Schicht unmittelbar im Wesentlichen luftdichte, leichte Schalldämmschicht aufweist, die mit der porösen weiteren Schicht unmittelbar und stoffschlüssig verbunden ist, wobei die Reaktionsmischung im Wesentlichen nicht parallel zu der Rückseite der aus einem, vorzugsweise dünnen, Spinnfaservlies aus thermoplastischen Fasern bestehenden porösen, weiteren, dritten Schicht auf das Spinnfaservlies aufgespritzt und/oder im Wesentlichen nicht parallel zu der Bodenfläche der Kavität des Schaumwerkzeugs eingespritzt wird, so dass die Reaktionsmischung, vorzugsweise dabei bzw. infolgedessen, insbesondere aufgrund der von der Reaktionsmischung ausgeübten Druckkräfte, das poröse Spinnfaservlies durchdringt und auch wenigstens teilweise, insbesondere im Wesentlichen ohne Durchdringung der porösen ersten Schicht bzw. des daraus gebildeten Schallabsorbers, in die mit dem Spinnfaservlies, vorzugsweise unmittelbar, insbesondere stoffschlüssig, verbundene poröse erste Schicht eindringt, wobei bzw. wonach sich aus der wenigstens teilweise in die poröse erste Schicht eingedrungenen Reaktionsmischung, ggf. auch aus der das Spinnfaservlies durchsetzenden Reaktionsmischung, die im Wesentlichen luftdichte und mit dem Schaumstoffmaterial der zweiten Schicht gebildete Schalldämmschicht ergibt bzw. ausbildet.

Ein derartiges Polypropylen-Spinnfaservlies kann bevorzugt eine Höchstzugkraft, gemessen nach DIN EN 29073-3 in Produktionsrichtung in einem Bereich von 155 bis 185 N/5 cm und/oder quer zur Produktionsrichtung in einem Bereich von 90 bis 120 N/5 cm aufweisen. Ein derartiges Polypropylen-Spinnfaservlies kann alternativ oder zusätzlich, gemessen nach der gleichen Norm, eine Höchstdehnung im Bereich von 80 bis 100 % in Produktionsrichtung und/oder im Bereich von 90 bis 110 % quer zur Produktionsrichtung, aufweisen. Ein solche mechanische Eigenschaften aufweisendes Polypropylen-Spinnfaservlies genügt in besonderem Maße den Anforderungen beim Aufspritzen des Reaktionsgemisches und ermöglicht vorteilhafte mechanische Kennwerte des daraus hergestellten bzw. aufgebauten Materialaufbaus bzw. der Verkleidung.

Ein derartiges Herstellungsverfahren lässt sich besonders einfach und kostengünstig auf bestehenden Anlagen mit vergleichsweise geringen Investitionsmitteln, insbesondere mit einfachen bzw. unkomplizierten Werkzeugen realisieren, so dass sich mit einem derartigen Verfahren besonders kostengünstige Verkleidungsteile bzw. Materialaufbauten herstellen lassen.

In besonders bevorzugter Weiterbildung des Verfahrens kann vorgesehen sein, dass die Reaktionsmischung im Wesentlichen senkrecht zu der Rückseite des Spinnfaservlies auf die Rückseite des Spinnfaservlies und/oder im Wesentlichen senkrecht zu der Bodenfläche der Kavität des Schaumwerkzeugs auf- bzw. eingespritzt wird. Dadurch kann die Durchdringung des Spinnfaservlies mit dem Reaktionsgemisch und das Eindringen desselben in die benachbarte poröse erste Schicht, vorzugsweise das Faservlies, weiter verbessert werden.

Das Spinnfaservlies kann, vorzugsweise vor dem Einlegen in das Schäumwerkzeug, auf die poröse erste Schicht aufkaschiert, beispielsweise aufgeklebt, insbesondere auf der porösen ersten Schicht thermisch fixiert, sein bzw. werden. Dadurch kann das Spinnfaservlies in einfacher Art und Weise zusammen mit der porösen ersten Schicht, beispielsweise dem Faservlies, einfach handhabbar in das offene Schäumwerkzeug in Form einer gemeinsamen Bahn, vorzugsweise in Form eines gemeinsamen Zuschnitts, beispielsweise einer gemeinsamen Platine, eingelegt werden.

Das Aufspritzen auf das Faservlies bzw. das Hinterspritzen oder Hinterschäumen des Faservlies bzw. des Spinnfaservlies kann in einem offenen oder in einem geschlossenen Schäumwerkzeug durchgeführt werden oder kann sowohl in einem offenen als auch in einem geschlossenen Schäumwerkzeug durchgeführt werden. Beim Durchführen des Verfahrens in einem offenen Schäumwerkzeug können besonders großflächige Verkleidungen bzw. Materialaufbauten und/oder Materialaufbauten bzw. Verkleidungen mit einem besonders niedrigen Flächengewicht bzw. besonders niedrigem Raumgewicht verwirklicht werden.

Gemäß einer besonders bevorzugten Ausführungsvariante des erfindungsgemäßen Verfahrens kann vorgesehen sein, dass wenigstens ein Werkzeugteil, vorzugsweise eine Werkzeughälfte, des Schäumwerkzeugs mit Niederhaltern versehen ist, mittels derer das Spinnfaservlies, vorzugsweise auch die mit dem Spinnfaservlies versehene poröse erste Schicht, oder ein aus dem Spinnfaservlies und der porösen ersten Schicht bestehender poröser Materialverbund, beim und/oder nach dem Schließen des Schäumwerkzeuges in der Kavität des Schäumwerkzeugs fixiert und/oder in die Kavität des Schäumwerkzeugs gedrückt wird. Derartige Niederhalter können bevorzugt an einem Oberwerkzeug befestigt sein. Es versteht sich jedoch, dass solche Niederhalter auch oder zusätzlich an einem Unterwerkzeug befestigt sein können. Die Verwendung derartiger Niederhalter ermöglicht die Verarbeitung von besonders preiswerter reiner, d. h. ungebundener, Baumwollfaservliese. Ferner ermöglichen derartige Niederhalter die Verarbeitung nicht vorverformter, d. h. im Wesentlichen planer, flächiger, poröser Absorber, insbesondere Faservliese, so dass dadurch eine besonders kostengünstige Verarbeitung und/oder besonders kostengünstige Materialaufbauten bzw. Verkleidungen verwirklichbar sind. Auch kann dadurch auf die Verwendung teurer thermoplastischer Fasern, beispielsweise sogenannter Bikomponentenfasern, in den Faservliesmaterialien verzichtet werden. Die Verformung der porösen Schicht, insbesondere des Faservlies bzw. der mit dem Spinnfaservlies versehenen porösen Schicht, insbesondere des Faservlies, kann dann in besonders einfacher Art und Weise in einem entsprechend konturierten bzw. gestalteten Schäumwerkzeug verwirklicht werden.

Eine besonders kostengünstige und zugleich einfach reinigbare Konstruktion kann dadurch erreicht werden, dass die Niederhalter fest, insbesondere starr, an dem diese tragenden Werkzeugteil befestigt sind.

Die Niederhalter können als, vorzugsweise zylindrische, insbesondere eine Dicke und/oder einen Außendurchmesser von 1 bis 5 mm, vorzugsweise von 1 bis 4 mm, beispielsweise 3 mm, aufweisende, Stifte gestaltet sein. Derart dünne Stifte beeinträchtigen bei Einbringen der Reaktionsmischung in das geschlossene Schäumwerkzeug die Strömungsverhältnisse kaum und/oder hinterlassen, auch beim Einbringen der Reaktionsmischung in das geöffnete Schäumwerkzeug, nach dem Schließen des Schäumwerkzeuges und nach dem Aushärten des Reaktionsgemisches kaum merkliche Öffnungen. Im Gegenteil hat es sich gezeigt, dass dann, wenn die bzw. der aus der ausgehärteten Reaktionsmischung hergestellte Schaumstoffschicht bzw. Schaumstoff des Schallabsorbers der zweiten Schicht, nach dem Entformen der Verkleidung aus dem Schäumwerkzeug, an Stellen, an denen zuvor die Niederhalter von dem Schaumstoffmaterial unmittelbar umgeben waren, Sacklöcher und/oder bis unmittelbar zu dem Spinnfaservlies reichende Löcher aufweisen, zugleich weiter verbesserte Schallabsorptionseigenschaften und/oder ein noch weiter verringertes Gesamtgewicht der erfindungsgemäßen Verkleidungen bzw. Materialaufbauten möglich sind.

Ferner kann vorgesehen sein, dass die an dem Werkzeugteil befestigten Niederhalter eine unterschiedliche Länge bzw. Höhe über der die Kavität des Schäumwerkzeuges begrenzenden Oberfläche des Werkzeugteils aufweisen. Dadurch kann bzw. können eine in bestimmten Bereichen unterschiedliche Verformung des Spinnfaservlies zusammen mit der porösen ersten Schicht, insbesondere dem Faservlies, und/oder unterschiedliche lokale Dicken der Verkleidung bzw. des Materialaufbaus realisiert werden.

Von besonderem Vorteil ist es, wenn die Niederhalter beim Einbringen der Reaktionsmischung in das Schäumwerkzeug von der Reaktionsmischung unmittelbar umströmt werden und/oder nach dem Einbringen der Reaktionsmischung in das Schäumwerkzeug von der Reaktionsmischung unmittelbar umgeben und/oder umströmt sind bzw. werden und/oder wenn die Niederhalter nach dem Aushärten der Reaktionsmischung von dem Schaumstoff der ausgehärteten Reaktionsmischung unmittelbar umschäumt sind.

Ferner kann es von Vorteil sein, wenn die mit dem Spinnfaservlies versehene poröse erste Schicht bzw. ein oder der aus dem Spinnfaservlies und der porösen ersten Schicht bestehende/r poröse/r Materialverbund in die Kavität eines Werkzeugteils, vorzugsweise einer Werkzeughälfte, des offenen Schäumwerkzeugs eingelegt wird, und dass anschließend, vor oder nach dem Schließen des Schäumwerkzeuges, die Reaktionsmischung durch Aufspritzen auf das Spinnfaservlies in das Schäumwerkzeug eingebracht wird. Dies ermöglicht eine noch kostengünstigere Herstellung.

Die Herstellung lässt sich weiter vereinfachen und noch kostengünstiger gestalten, wenn das Spinnfaservlies und/oder die poröse erste Schicht oder ein bzw. der aus dem Spinnfaservlies und der porösen ersten Schicht gebildete/r poröse/r Materialverbund, als ein Materialbahnabschnitt oder als ein Zuschnitt, z.B. als eine Platine, in das offene Schäumwerkzeug eingelegt und anschließend, vor oder nach dem Schließen des Schäumwerkzeugs, mit der Reaktionsmischung hinterspritzt wird bzw. werden.

Diese Vorteile können noch weiter verbessert werden, wenn die poröse erste Schicht oder die mit dem Spinnfaservlies versehene poröse erste Schicht oder ein bzw. der mit dem Spinnfaservlies und der porösen ersten Schicht gebildete/r poröse/r Materialverbund, ohne eine bzw. im Wesentlichen ohne eine Vorverformung, mit Hilfe der Niederhalter in dem Schäumwerkzeug, gegebenenfalls unter gleichzeitiger Verformung, fixiert und/oder in das Schäumwerkzeug gedrückt wird.

In bevorzugter Weiterbildung des Verfahrens kann vorgesehen sein, dass das Spinnfaservlies (44) vor oder nach dem Einlegen in das Schäumwerkzeug (60) teilweise an- und/oder ein- und/oder durchgeschnitten wird bzw. ist.

Gemäß einer besonders vorteilhaften Ausgestaltung des Verfahrens kann vorgesehen sein, dass das auf der porösen ersten Schicht aufliegende oder das mit der porösen ersten Schicht stoffschlüssig verbundene Spinnfaservlies an-und/oder ein- und/oder durchgeschnitten wird bzw. ist. Durch das gezielte An-, Ein- und/oder Durchschneiden des Spinnfaservlies lässt sich eine gezielte, mehr oder weniger starke bzw. stärkere Durchdringung der porösen ersten Schicht, insbesondere des Faservlies, bis hin zu einer im Bereich des bzw. der jeweiligen Schnitte/s vollständigen Durchdringung des porösen Absorbers bzw. des Faservlies verwirklichen.

Das erfindungsgemäße Herstellungsverfahren kann ganz besonders einfach und kostengünstig durchgeführt werden, wenn die die Kavität des Schäumwerkzeuges begrenzenden Oberflächen des Schäumwerkzeuges während des Einbringens bzw. Einspritzens der Reaktionsmischung in die Kavität des Schäumwerkzeuges und bis zum Aushärten zumindest der Schalldämmschicht, vorzugsweise bis zum Aushärten der die Schalldämmschicht enthaltenden Schaumstoffschicht bzw. Schallabsorberschicht, eine im Wesentlichen gleiche Temperatur aufweisen bzw. auf einer im Wesentlichen gleich bleibenden Temperatur gehalten bzw. geregelt werden.

Gemäß einer weiter bevorzugten Ausgestaltung des Verfahrens kann vorgesehen sein, dass der Reaktionsmischung, insbesondere dem Polyol, vorzugsweise vor dem Einspritzen der Reaktionsmischung, Kohlendioxid (CO₂) zugesetzt wird bzw. ist. Durch die Verwendung von mit Kohlendioxid beladenem Polyurethan lässt sich das Raumgewicht und folglich das Gesamtgewicht des Materialaufbaus bzw. der Verkleidung noch weiter reduzieren und außerdem kann dadurch die Menge der in die poröse erste Schicht, insbesondere in das Faservlies, eindringenden Reaktionsmischung bzw. des eindringenden Polyurethans, weiter reduziert werden. Es lassen sich also dadurch die Eindringtiefe und Menge des Reaktionsgemisches und folglich des nach dessen Aushärtung gebildeten Polyurethanschaumes reduzieren bzw. weiter begrenzen, was zu einer noch größeren Material- bzw. Gewichts- und Kostenreduktion führt.

Gemäß einer besonders bevorzugten Ausführungsvariante des erfindungsgemäßen Verfahrens kann vorgesehen sein, dass die Reaktionsmischung unter Ausbildung eines im Wesentlichen nicht seitlich aufgefächerten Einspritzstrahls und/oder unter Ausbildung eines im Wesentlichen kompakten Einspritzstrahls, vorzugsweise mit Hilfe eines einen derartigen Einspritzstrahl erzeugenden Einspritzkopfes oder einer Einspritzdüse, auf das Spinnfaservlies aufgespritzt wird. Dadurch lässt sich eine besonders gute Durchdringung der Spinnfaserschicht und ein dementsprechend besseres bzw. tieferes Eindringen der Reaktionsmischung in die poröse Schicht bzw. den porösen Absorber verwirklichen.

In einer vorteilhaften Ausgestaltung des Verfahrens kann vorgesehen sein, dass die Reaktionsmischung frei oder im Wesentlichen frei von festen und/oder eine größere Dichte als die Reaktionsmischung aufweisenden Füllstoffen auf bzw. eingespritzt wird. Die dadurch hergestellten Verkleidungen bzw. Materialaufbauten weisen ein besonders geringes Gewicht auf.

Es versteht sich, dass die vorstehenden Merkmale und Maßnahmen im Rahmen der Ausführbarkeit einzeln und in Kombination beliebig kombinierbar sind.

Weitere Vorteile, Merkmale und Gesichtspunkte der Erfindung ergeben sich aus den Ansprüchen und aus dem nachfolgenden Beschreibungsteil, in dem bevorzugte Ausführungsbeispiele der Erfindung anhand der Figuren beschrieben sind.

Es zeigen:
- Fig. 1: einen stark vergrößerten schematischen Quer- schnitt einer erfindungsgemäßen Verkleidung;
- Fig. 2: eine Schnittansicht eines Schäumwerkzeugs zur Herstellung einer erfindungsgemäßen Verkleidung unter Anwendung eines erfindungsgemäßen Verfah- rens gemäß einer ersten Verfahrensvariante, wo- bei ein aus einer porösen Schicht aus einem Baumwollfaservlies und aus einem damit verbun- denen Spinnfaservlies gebildeter Materialver- bund in Form eines Zuschnitts in das geöffnete Schäumwerkzeug eingelegt ist;
- Fig. 3: eine Schnittansicht des Schäumwerkzeugs gemäß Figur 2 am Ende einer Einspritzphase, in der auf der Rückseite des Spinnfaservlies des Mate- rialverbundes eine Reaktionsmischung aus Polyol und Isocyanat aufgespritzt wird, und zwar bei geöffnetem Schäumwerkzeug;
- Fig. 4: eine Schnittansicht des Schäumwerkzeugs gemäß Figur 3 in einer nunmehr geschlossenen Stel- lung, in welcher mit Hilfe des Schäumwerkzeugs eine erfindungsgemäße Verkleidung hergestellt ist;
- Fig. 5: eine der Figur 2 entsprechende Schnittansicht eines Schäumwerkzeugs zur Herstellung einer er- findungsgemäßen Verkleidung unter Anwendung ei- nes erfindungsgemäßen Verfahrens gemäß einer zweiten Verfahrensvariante, wobei wiederum ein aus einer porösen Schicht aus einem Baumwollfa- servlies und aus einem damit verbundenen Spinn- faservlies gebildeter Materialverbund in Form eines Zuschnitts in das geöffnete Schäumwerk- zeug eingelegt ist;
- Fig. 6: eine Schnittansicht des Schäumwerkzeugs gemäß Figur 5 in einer geschlossenen Stellung vor einer Einspritzphase;
- Fig. 7: eine Schnittansicht des Schäumwerkzeugs gemäß Figur 6 in nach wie vor geschlossener Stellung am Ende einer Einspritzphase, in welcher eine Reaktionsmischung aus Polyol und Isocyanat im Wesentlichen senkrecht zur Rückseite des Spinn- faservlies des Materialverbundes in das ge- schlossene Werkzeug eingespritzt wird bzw. wur- de, wonach eine erfindungsgemäße Verkleidung hergestellt ist.

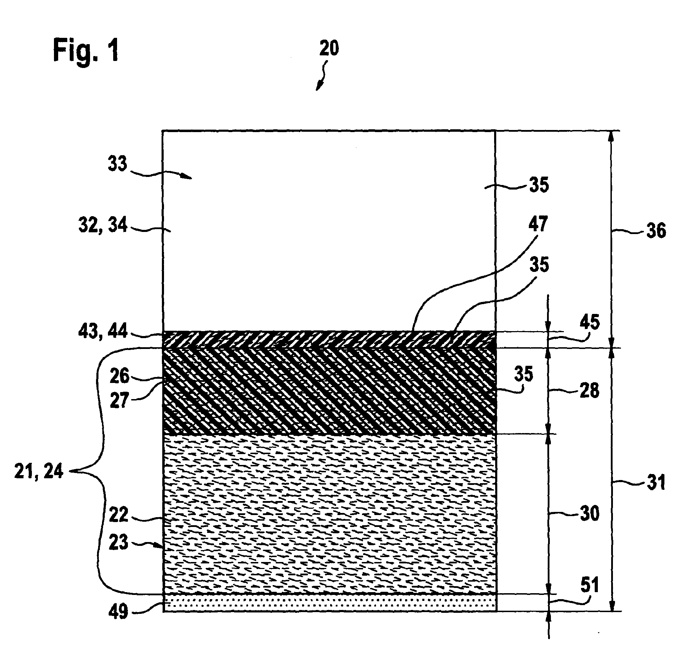

Die in Figur 1 in schematischer Querschnittsansicht gezeigte leichte, schallisolierende Verkleidung 20 bzw. der dort dargestellte Materialaufbau kann zur Schallisolation eines Karosserieteils eines Kraftfahrzeugs, insbesondere in Form einer leichten Stirnwandverkleidung, oder zur Verkleidung einer in einem Motorraum eines Kraftfahrzeugs befindlichen Komponente bevorzugt eingesetzt werden. Die Verkleidung 20 umfasst eine poröse erste Schicht 21, die im nicht gezeigten Ausgangszustand bzw. Rohzustand mit einem Baumwollfaservlies 24, vorzugsweise aus reinen, d. h. nicht gebundenen Baumwollfasern, gebildet ist. Bevorzugt wird bzw. ist Reißbaumwolle verwendet. Das Flächengewicht dieses Baumwollfaservlieses 24 beträgt vorzugsweise 700 bis 1.000 g/m². In der fertig hergestellten Verkleidung 20 bzw. im fertig hergestellten Materialaufbau umfasst die poröse erste Schicht 21 wenigstens zwei Schichten 22, 27. Bei der Schicht 22 handelt es sich um einen luftdurchlässigen, porösen, ersten Schallabsorber 23, der hier aus dem Baumwollfaservlies 24 besteht. Die weitere Schicht 27 ist mit der Schicht 22 des porösen ersten Schallabsorbers 23 stoffschlüssig und unmittelbar verbunden und bildet eine im Wesentlichen luftdichte, leichte Schalldämmschicht 27 aus. Die Schalldämmschicht 27 ist aus den Ausgangsmaterialien einer zweiten Schicht 32 gebildet, bei der es sich um einen zweiten Schallabsorber 33 handelt. Dieser zweite Schallabsorber 33 besteht hier aus einem offenzelligen, vorzugsweise in einem einstufigen Verfahren (one-shot) geschäumten, Schaumstoff 34, bei dem es sich hier um einen Polyurethan-Weichschaumstoff 34 handelt. Dieser ist offenzellig und luftdurchlässig ausgebildet und weist eine Rohdichte von vorzugsweise 50 kg/m³ auf.

Im gezeigten Ausführungsbeispiel handelt es sich um einen nicht-viskoelastischen Schaumstoff 34, der einen mechanischen Verlustfaktor von kleiner 0,3, beispielsweise von 0,15 bis 0,25, insbesondere von 0,2, aufweist. Jedoch kann es sich auch um einen viskoelastischen Schaumstoff handeln, der einen mechanischen Verlustfaktor von mehr als 0,3, insbesondere von 0,35 bis 0,4, aufweisen kann. Die poröse zweite Schicht 32 aus Polyurethan-Weichschaumstoff 34 weist beispielsweise eine Dicke bzw. Schichtdicke 36 von 5 bis 50 mm auf.

Die Schalldämmschicht 27 befindet sich zwischen dem ersten Schallabsorber 23 und dem zweiten Schallabsorber 33. Die Schalldämmschicht 27 ist mit dem ersten Schallabsorber 23 der ersten Schicht 21 durch Hinterspritzen bzw. Hinterschäumen des ersten Schallabsorbers 23 im Wesentlichen ohne Schaumdurchschlag stoffschlüssig verbunden.

Erfindungsgemäß ist zwischen dem zweiten Schallabsorber 33 aus Polyurethan-Weichschaum 34 und dem porösen ersten Schallabsorber 23 der ersten Schicht 21 eine poröse dritte Schicht 43 aus einem aus thermoplastischen Fasern gebildeten bzw. hergestellten, dünnen, Spinnfaservlies 44 angeordnet. Dieses Spinnfaservlies 44 ist vorzugsweise aus Polypropylenfasern hergestellt, so dass es sich vorzugsweise um ein Polypropylen-Spinnfaservlies 44 handelt.

Das Spinnfaservlies 44 ist stoffschlüssig unmittelbar mit dem zweiten Schallabsorber 33 verbunden. Das Schaummaterial 35 des zweiten Schallabsorbers 33 aus Polyurethan-Weichschaum 34 durchdringt, durchsetzt also vollständig, das poröse Spinnfaservlies 44, bzw. deren Poren, wobei das das Spinnfaservlies 44 durchdringende Schaummaterial 35 in unmittelbarer stoffschlüssiger Materialverbindung in einem sich an das Spinnfaservlies 44 auf dessen von dem zweiten Schallabsorber 33 bzw. von ihrer Rückseite 47 weg weisenden Seite unmittelbar anschließenden Materialbereich 26 der porösen ersten Schicht 21, die poröse erste Schicht 21 nur teilweise und ohne Schaumdurchschlag durchsetzt, also dementsprechend teilweise in das Baumwollfaservlies 24 in dem besagten Materialbereich 26 der ersten Schicht 21 eingedrungen ist.

Das Material der porösen ersten Schicht 21 in dem besagten Materialbereich 26, der von dem Schaummaterial 35, d. h. hier von dem Polyurethan-Weichschaummaterial des zweiten Schallabsorbers 33 durchsetzt ist und ferner das, die poröse erste Schicht 21 durchsetzende Schaummaterial 35 und außerdem das Material des Spinnfaservlies 44 und auch das dieses durchdringende Schaummaterial 35 des zweiten Schallabsorbers 33 bilden die Schalldämmschicht 27 aus. Der von dem Schaummaterial 35 des zweiten Schallabsorbers 33 durchsetzte Teil des Baumwollfaservlieses 24 der ersten Schicht 21 schließt sich in einer dem besagten Materialbereich 26 entsprechenden Schichtdicke 28 unmittelbar an das Spinnfaservlies 47 an, das von dem Schaummaterial 35 des zweiten Schallabsorbers 33 durchdrungen ist. Die Schichtdicke 28 des Materialbereichs 26 bzw. der Schalldämmschicht 27 beträgt hier beispielsweise etwa 3 bis 4 mm. Die Schichtdicke 30 der Schicht 22 beträgt hier beispielsweise 4 bis 7 mm.

Das Polypropylen-Spinnfaservlies 47 weist im Ausgangs- bzw. Rohzustand ein Flächengewicht von beispielsweise 60 g/m² auf. Das Polypropylen-Spinnvlies 44 weist im Roh- bzw. Ausgangszustand eine Schichtdicke 45 von vorzugsweise 0,3 bis 0,4 mm auf. Das Spinnfaservlies ist im Ausgangszustand bzw. Rohzustand luftdurchlässig. Die Luftdurchlässigkeit gemessen bei einem Prüf- bzw. Differenzprüfdruck von 200 Pa beträgt beispielsweise 1.000 bis 1.200 L/m²s. Der Strömungswiderstand des Spinnfaservlies 44 beträgt im Roh- bzw. Ausgangszustand beispielsweise 180 Ns/m³. Das bevorzugt verwendete Polypropylen-Spinnfaservlies 44 weist im Roh- bzw. Ausgangszustand gute mechanische Kennwerte auf. So weist es beispielsweise eine in Produktionsrichtung bzw. in Längsrichtung gemessene Höchstzugkraft von 169 N/5cm und quer zur Produktionsrichtung bzw. in Querrichtung gemessen eine Höchstzugkraft von 102 N/5 cm auf. Das Spinnfaservlies 44 weist ferner in Produktionsrichtung bzw. in Längsrichtung gemessen eine Höchstdehnung (Dehnung bei Höchstzugkraft) von 92,0 % und quer zur Produktionsrichtung bzw. in Querrichtung gemessen eine Höchstdehnung (Dehnung bei Höchstzugkraft) von 98,0 % auf. Ein derartiges Spinnvlies 47 kann ein Flächengewicht von beispielsweise 60 g/m² aufweisen.

Bei dem Spinnfaservlies 44 handelt es sich um ein textiles Flächengebilde. Dieses wird das direkt aus der Spinnmasse bzw. Schmelze von thermoplastischen Fasern, hier Polypropylenfasern, kontinuierlich hergestellt, indem die thermoplastischen Fasern, vorzugsweise unmittelbar, nach ihrem Austritt aus einer Spinndüse auf einem Transportband zu einem Spinnvlies bzw. Spinnfaservlies 44 abgelegt, vorzugsweise noch chemisch und/oder mechanisch verfestigt, wird. Die Verfestigung kann beispielsweise mit Hilfe von beheizten Walzen bzw. mit Hilfe eines Kalanders und/oder mit Hilfe eines Dampfstromes erfolgen. An den Kontaktstellen verschmelzen dabei die Fasern bzw. Filamente und bilden so den Vliesstoff.

Die erste Schicht 21, die hier von einem Baumwollfaservlies ausgebildet ist, weist im Ausgangs- bzw. Rohzustand eine Luftdurchlässigkeit im Bereich von 270 bis 310 1/m²s bzw. mm/s bei einem Prüfdruck von 200 Pa auf. Es weist ferner einen Strömungswiderstand auf, der vorzugsweise 700 bis 1.000 Ns/m³, beispielsweise etwa 800 Ns/m³ beträgt. Die Schichtdicke 31 der ersten Schicht 21 beträgt beispielsweise etwa 8 bis 10 mm. Dann ergibt sich im Ausgangszustand ein längenspezifischer Strömungswiderstand von etwa 80 bis 125 kNs/m⁴.

Die erste Schicht 21 bzw. der Schallabsorber 23 der ersten Schicht 21 kann auf ihrer bzw. seiner von dem Spinnvlies 44 weg weisenden Seite mit einer Deckschicht 49, vorzugsweise in Form eines Abdeckvlies 49, versehen sein. Eine derartige Deckschicht 49 kann, ebenso wie das Spinnfaservlies 44, vor der Verarbeitung bzw. Herstellung der Verkleidung 20 bzw. des Materialaufbaus, im Ausgangs- bzw. Rohzustand auf dem Baumwollfaservlies der ersten Schicht aufkaschiert sein.

Im Ausgangszustand vor dem Einspritzen bzw. Hinterspritzen mit einer Reaktionsmischung 67 kann also ein leicht und einfach handhabbarer Materialverbund 50, vorzugsweise in Form eines Zuschnitts 55 vorgesehen sein.

Die Deckschicht bzw. das Abdeckvlies 49 kann bevorzugt aus Polyesterfasern bestehen. Die Deckschicht 49 ist ebenfalls porös und luftdurchlässig. Sie kann ein Flächengewicht von beispielsweise 85 g/m² aufweisen. Die Deckschicht 49 kann ferner bevorzugt einen Strömungswiderstand von etwa 215 Ns/m³ aufweisen.

Im Ausgangszustand des Materialverbundes bestehend aus dem Baumwollfaservlies 24 und den beiden Deckschichten 43 und 49, d. h. der Schicht aus Spinnfaservlies 44 und der Deckschicht aus Abdeckvlies 49, kann dieser Materialverbund bevorzugt einen Strömungswiderstand von etwa 930 bis 1.080 Ns/m³ aufweisen.

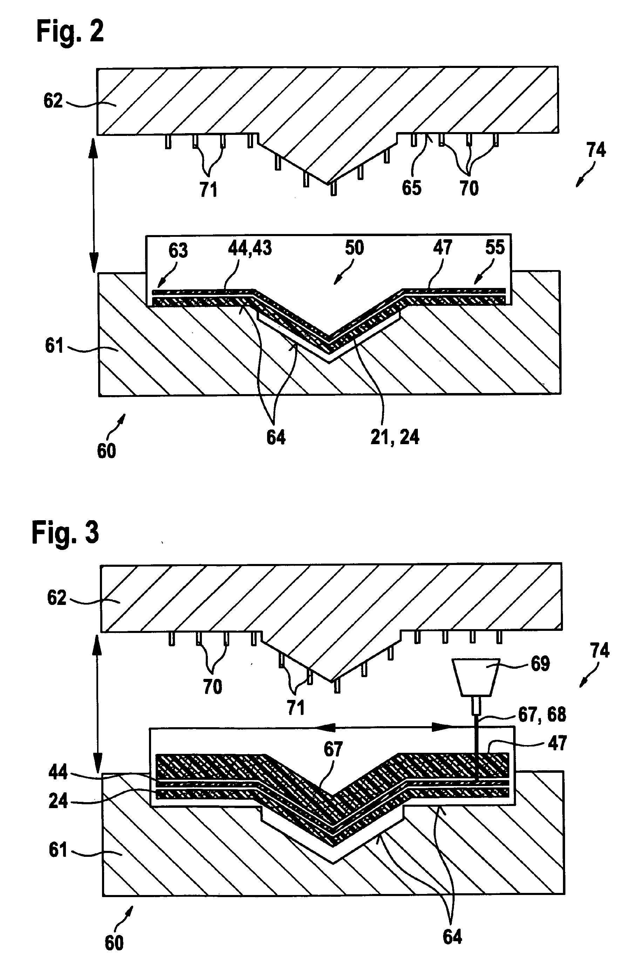

Zur Herstellung einer erfindungsgemäßen Verkleidung bzw. eines erfindungsgemäßen Materialaufbaus 20 kann, beispielsweise wie aus den Figuren 2 bis 4 oder 5 bis 7 ersichtlich, vorgegangen werden. Ein derartiger Materialaufbau bzw. eine derartige Verkleidung 20 kann erfindungsgemäß derart hergestellt werden, dass eine poröse, vorzugsweise einen luftdurchlässigen, porösen ersten Schallabsorber 23, enthaltende, insbesondere aus dem Material eines luftdurchlässigen porösen ersten Schallabsorbers 23 bestehende, erste Schicht 21, insbesondere in Form des Faservlies 24, in ein offenes Schäumwerkzeug 60 eingebracht, vorzugsweise eingelegt wird, das eine mit einer Bodenfläche 64 begrenzte Kavität 63 enthält. Dabei kann eine luftdurchlässige, poröse, weitere bzw. dritte Schicht 43 auf ihrer Rückseite 47 mit einer Polyol und Isocyanat enthaltenden Reaktionsmischung 67, vorzugsweise direkt, hinterspritzt bzw. hinterschäumt werden, wobei sich aus der Reaktionsmischung 67 eine Schaumstoffschicht, hier aus Polyurethan-Weichschaum 34, ergibt, die eine hier offenzellige zweite Schicht 32 aus einem Schallabsorber 33 und eine im Wesentlichen luftdichte, leichte Schalldämmschicht 27 aufweist, die mit der porösen weiteren Schicht 43 unmittelbar und stoffschlüssig verbunden ist.

Erfindungsgemäß wird die Reaktionsmischung 67 im Wesentlichen nicht parallel, vorzugsweise zumindest teilweise oder großteils bzw. im Wesentlichen senkrecht, zur Rückseite 47 der aus einem dünnen Spinnfaservlies 44 aus thermoplastischen Fasern, hier Polypropylenfasern, bestehenden porösen, weiteren, dritten Schicht 43 auf das Spinnfaservlies 44 aufgespritzt und/oder wird die Reaktionsmischung 67 im Wesentlichen nicht parallel, vorzugsweise teilweise oder größtenteils bzw. im Wesentlichen senkrecht zu der Bodenfläche 64 der Kavität 63 des Schäumwerkzeugs 60 eingespritzt, so dass dabei bzw. infolgedessen und aufgrund der von der Reaktionsmischung 67 ausgeübten Druckkräfte, die Reaktionsmischung 67 das poröse Spinnfaservlies 44 durchdringt und außerdem auch, wenigstens teilweise, vorzugsweise im Wesentlichen ohne Durchdringung der porösen ersten Schicht 21 bzw. des daraus gebildeten bzw. hergestellten Schallabsorbers 23, in die mit dem Spinnfaservlies 44, vorzugsweise unmittelbar, insbesondere stoffschlüssig, verbundene poröse erste Schicht 21 eindringt, wobei bzw. wonach sich aus der wenigstens teilweise in die poröse erste Schicht 21 eingedrungenen Reaktionsmischung 67 und hier auch aus der das Spinnfaservlies 44 durchsetzenden Reaktionsmischung 67, die im Wesentlichen luftdichte Schalldämmschicht 27 ergibt bzw. ausbildet.

Gemäß der in einer Abfolge der Figuren 2 bis 4 hervorgehenden Ausführungsvariante des ersten Ausführungsbeispiels eines erfindungsgemäßen Verfahrens kann die Reaktionsmischung bzw. das Reaktionsgemisch 67 in das geöffnete Formwerkzeug 60 eingetragen bzw. eingespritzt werden.

Das Formwerkzeug 60 umfasst wenigstens zwei Werkzeugteile 61, 62, bei denen es sich üblicherweise um eine erste Werkzeughälfte 61, hier in Form eines Unterwerkzeugs, und um eine zweite Werkzeughälfte 62, hier in Form eines Oberwerkzeugs handeln kann. Das Schaumwerkzeug 60 umfasst eine Kavität 63, die mit einer hier im Unterwerkzeug 61 ausgebildeten Bodenfläche 64 und in einer im Oberwerkzeug 62 ausgebildeten Oberfläche 65 nach oben und nach unten begrenzt ist. Das Oberwerkzeug 62 umfasst im Bereich der Kavität 63 eine Vielzahl von als Stifte 71 ausgebildeten Niederhaltern 70. Die Stifte 71 sind vorzugsweise kreiszylindrisch gestaltet und weisen einen vergleichsweise geringen Außendurchmesser, beispielsweise von nur 1 bis 3 mm auf. Die Stifte 71 sind fest und starr mit dem Oberwerkzeug 62 verbunden. In den gezeigten Ausführungsbeispielen weisen die Stifte jeweils eine gleich große Höhe bzw. Länge oberhalb der die Kavität 63 begrenzenden Oberfläche 65 des Oberwerkzeugs 62 auf. Es versteht sich jedoch, dass die Stifte auch unterschiedliche Höhen bzw. Längen aufweisen können. Die Stifte 71 sind bevorzugt parallel zueinander und parallel zur Schließrichtung bzw. zur Öffnungsrichtung des Schäumwerkzeuges 60 angeordnet.

Wie in Figur 2 gezeigt, kann in das geöffnete, sich also in einer offenen Stellung 74 befindliche Schäumwerkzeug 60, ein Materialaufbau 50 umfassend ein mit einem Spinnfaservlies 44 kaschiertes bzw. stoffschlüssig verbundenes Baumwollfaservlies 24 in die hier im Unterwerkzeug 61 ausgebildete Kavität 63 eingelegt werden. Bei dem Materialverbund 50 handelt es sich hier um einen Zuschnitt 55 in Form einer Platine. Dieser Materialverbund 50 bzw. dieser Zuschnitt 55 ist hier vorverformt, in etwa entsprechend den Innenkonturen der Kavität 63.

Wie in Figur 3 gezeigt, kann eine Reaktionsmischung 67 aus vorzugsweise CO₂-beladenem Polyol und aus Isocyanat mit Hilfe eines Einspritzkopfes 69 bzw. einer Einspritzdüse, die vorzugsweise mit Hilfe eines nicht gezeigten Roboters positioniert werden kann, in Querrichtung entlang der Kavität bewegt und gleichzeitig um eine senkrecht zur Schließrichtung bzw. Öffnungsrichtung des Werkzeugs gedachte Drehachse gedreht werden. Mit Hilfe des Einspritzkopfes bzw. der Einspritzdüse 69 kann ein mit der Reaktionsmischung 67 gebildeter Einspritzstrahl 68 erzeugt werden, der im Wesentlichen nicht seitlich aufgefächert und auch vergleichsweise kompakt, also ähnlich einem Wasserstrahl, ausgebildet sein kann. Dieser Einspritzstrahl 68 kann mit Hilfe des Einspritzkopfes 69 im Wesentlichen nicht parallel, vorzugsweise im Wesentlichen senkrecht, zu der Rückseite 47 des Spinnfaservlies 44 auf das Spinnfaservlies 44 aufgespritzt werden. Dabei, d. h. durch die wirksamen Druckkräfte des Einspritzstrahls 68, gelangt ein Teil der Reaktionsmischung 67 durch die Poren des Spinnfaservlies 44 hindurch, so dass also das Spinnfaservlies 44 von der Reaktionsmischung 67 durchdrungen wird. Anschließend gelangt die Reaktionsmischung 67, die das Spinnfaservlies 44 durchdrungen hat, in die Poren des darunter angeordneten Baumwollfaservlies 24. Abhängig von den gewählten Verfahrensbedingungen und auch abhängig von dem gewählten Spinnfaservlies 44 kann dabei ein bestimmter Materialbereich 26 (vgl. Figur 1) des Baumwollfaservlies 24 von dem Reaktionsgemisch 67 durchsetzt werden, vorzugsweise ohne dass das Baumwollfaservlies 24 vollständig von der Reaktionsmischung 67 durchsetzt bzw. durchdrungen wird.

Ein Teil der Reaktionsmischung 67 verbleibt auf der Rückseite 47 des Spinnfaservlies 44 und bildet dort eine ausgebreitete Schicht aus, so wie dies beispielhaft und schematisch in Figur 3 gezeigt ist.

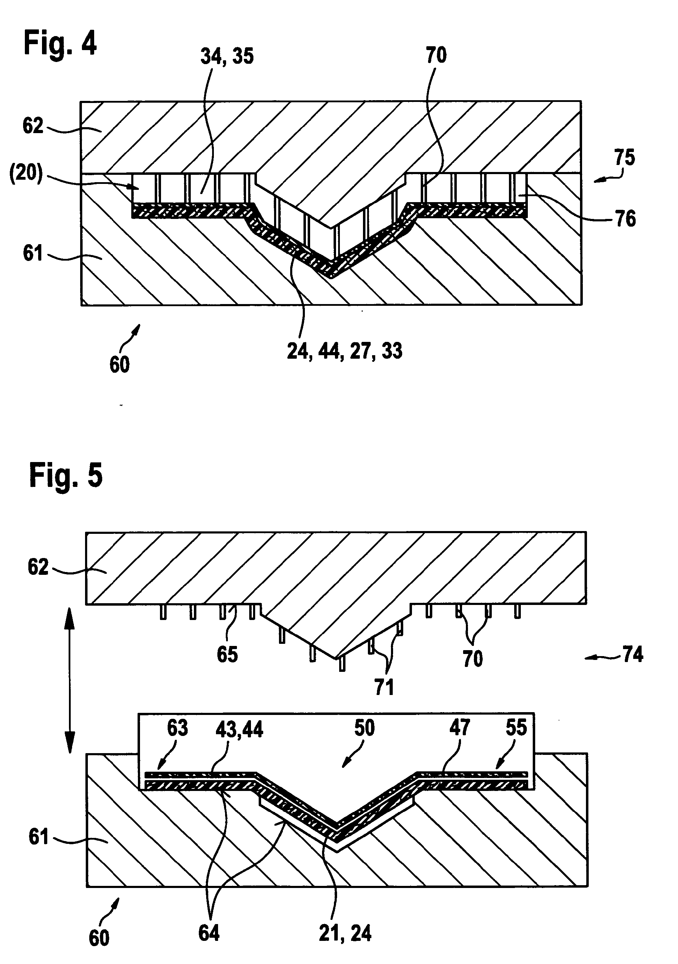

Bevor das Reaktionsgemisch 67 reagiert bzw. ausreagiert, wird der Einspritzvorgang beendet und der Einspritzkopf 69 wird entfernt. Anschließend werden die beiden Werkzeughälften 61 und 62 aufeinander zu bewegt, bis die in Figur 4 gezeigte geschlossene Stellung 75 des Schäumwerkzeugs 60 erreicht ist. Im Zuge des Schließens des Schäumwerkzeuges 60 durchdringen die Niederhalter-Stifte 71 die noch nicht ausreagierte Reaktionsmischung, bis sie auf der Rückseite 47 des Spinnfaservlies 44 zur Anlage gelangen. Ausgehend von dieser Anlagestellung wird das Schäumwerkzeug weiter geschlossen, so dass die Niederhalter-Stifte 71 im Zuge des weiteren Schließens des Schäumwerkzeuges 60 das Spinnfaservlies 44 und auch das Baumwollfaservlies 24 in die Kavität 63 des Unterwerkzeugs 61 drücken. Dadurch passt sich die Kontur des Materialverbunds 50 aus Baumwollfaservlies 24 und Spinnvlies 44 der Innenkontur bzw. der Bodenfläche 64 des Unterwerkzeugs 61 des Schäumwerkzeugs 60 an, so wie dies beispielhaft schematisch in Figur 4 gezeigt ist.

Nach dem vorzugsweise vollständigen Ausreagieren der Reaktionsmischung 67 zu einem Polyurethan-Weichschaum 34 kann das Schäumwerkzeug 60 wieder geöffnet werden. Im Zuge dessen werden die Niederhalter-Stifte 71 aus dem so hergestellten Schaum 34, 35 herausgezogen. Dadurch bzw. danach verbleiben in dem ausreagierten Schaum 34 bzw. Schaummaterial 35 der dann als Schallabsorber 33 fungierenden zweiten Schicht 32 eine der Anzahl an Niederhalter-Stiften 71 entsprechende Anzahl von Löchern 76. Dadurch kann zum einen das Gewicht des Materialaufbaus bzw. der Verkleidung 20 vorteilhaft minimiert werden. Derartige Löcher 76 können sich auch vorteilhaft auf die Schallisolationswirkung eines derartigen Materialaufbaus bzw. einer derartigen Verkleidung auswirken.

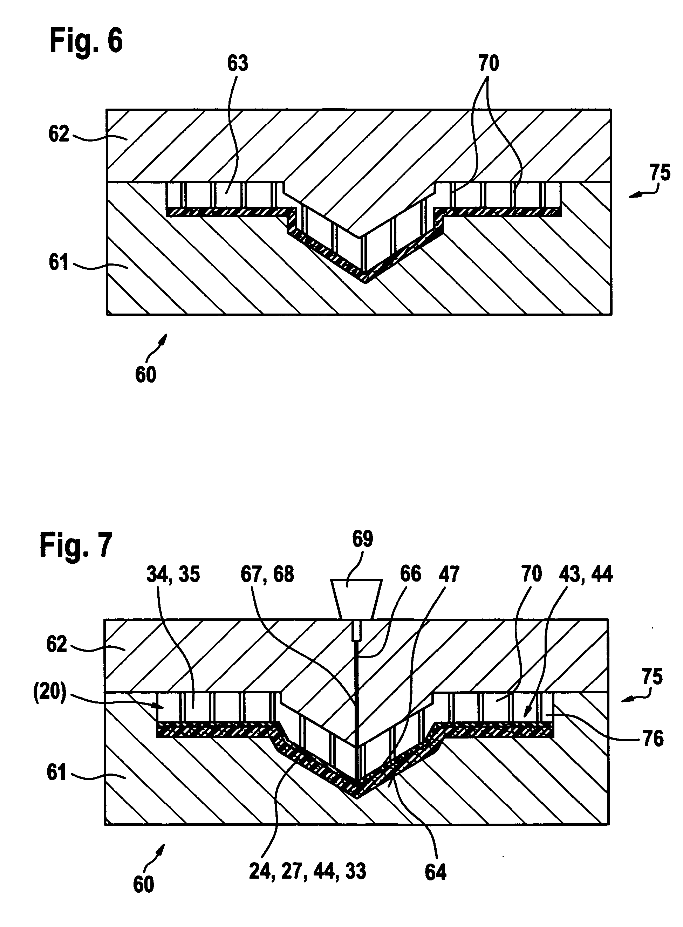

Aus den Figuren 5 bis 7 und der daraus hervorgehenden Ablauffolge ist ein alternatives erfindungsgemäßes Verfahren zur Herstellung einer erfindungsgemäßen Verkleidung 20 bzw. eines erfindungsgemäßen Materialaufbaus veranschaulicht. Dabei kann ein im Wesentlichen gleich aufgebautes Schäumwerkzeug 60 Verwendung finden. Wie aus Figur 7 ersichtlich, erfolgt das Einspritzen des Reaktionsgemisches bzw. der Reaktionsmischung 67 im Unterschied zu dem zuvor beschriebenen Verfahren nunmehr in der geschlossenen Stellung 75 des Schäumwerkzeuges 60. Zu diesem Zwecke kann das Schäumwerkzeug 60, hier beispielsweise das Oberwerkzeug 62 mit wenigstens einem Einspritzkanal 66 versehen sein, über den das Reaktionsgemisch 67 in die Kavität 63 des geschlossenen Schäumwerkzeuges 60 eingespritzt werden kann. Zu diesem Zwecke kann wiederum ein Einspritzkopf 69 bzw. eine Einspritzdüse verwendet werden, die an dem jeweiligen Kanal 66, von denen in Figur 7 nur ein Kanal 66 gezeigt ist, angeschlossen, beispielsweise eingesteckt, werden kann.

Ein derartiger Einspritzkanal 66 kann letztlich selbst als ein Einspritzkopf 69 bzw. als eine Einspritzdüse fungieren. Ein derartiger Kanal 66 kann vorzugsweise derart gestaltet sein, dass sich damit ein Einspritzstrahl 68 realisieren lässt, der seitlich im Wesentlichen nicht aufgefächert ist bzw. auffächert und der im Wesentlichen kompakt, d. h. flüssigkeitszusammenhängend, einspritzbar ist.

Bei diesem alternativen Herstellungsverfahren wird wiederum in das geöffnete Formwerkzeug 60 ein Bahnabschnitt, vorzugsweise ein Zuschnitt 55, eines Materialverbunds 50, bestehend wenigstens aus einem Baumwollvlies 24 und einem darauf aufkaschierten bzw. thermisch fixierten Spinnfaservlies 44, eingelegt. Der Materialverbund 50 kann, wie in Figur 5 gezeigt, vorverformt sein, kann jedoch auch nicht bzw. im Wesentlichen nicht vorverformt sein. Mit anderen Worten kann anstelle des schematisch in Figur 5 gezeigten wenigstens zwei-, vorzugsweise dreidimensional, vorverformten Materialverbundes 50, auch eine im Wesentlichen planebene flächige Platine bzw. ein derartiger Zuschnitt oder ein derartiger Bahnabschnitt eingelegt werden, der dann im Zuge des Schließens des Schäumwerkzeuges 60 in Verbindung mit der Einwirkung auch der Niederhalter-Stifte 71 verformt werden kann.

Ausgehend von der in Figur 5 gezeigten offenen Stellung 74 des Formwerkzeuges 60 und dem darin in die Kavität 63 des Unterwerkzeugs 61 eingelegten Materialaufbau 50, kann das Schäumwerkzeug 60, wie in Figur 6 gezeigt, geschlossen werden, so dass es sich dann in seiner geschlossenen Stellung 75 befindet. Im Zuge des Schließens des Schäumwerkzeuges 60 durch ein Aufeinanderzubewegen der beiden Werkzeughälften 61 und 62, drücken die Stifte 71 der Niederhalter 70 auf die Rückseite 47 des Spinnfaservlies 44, wodurch und wobei der Materialverbund 50 durch entsprechende Druckkräfte zur Anlage an der Bodenfläche 64 des Unterwerkzeugs 61 gebracht wird, so wie beispielsweise schematisch in Figur 6 gezeigt.

In dieser geschlossenen Stellung 75 des Schäumwerkzeuges 60 ist die Kavität 63 des Schäumwerkzeugs 60 noch nicht mit der Reaktionsmischung 67 gefüllt bzw. ist diese dort noch nicht eingespritzt bzw. eingebracht.

Anschließend kann, wie schematisch in Figur 7 gezeigt, die Reaktionsmischung 67 über ein oder mehrere Kanäle 66 unter Ausbildung eines im Wesentlichen seitlich nicht auffächernden und im Wesentlichen kompakten Einspritzstrahls 68 auf die Rückseite 47 des Spinnfaservlies 44 aufgespritzt werden, wodurch bzw. infolgedessen und bedingt durch die wirksamen Einspritz- bzw. Aufspritzdruckkräfte, die Reaktionsmischung 67 wiederum zum Teil durch die Poren des Spinnfaservlies 44 hindurch in die Poren des sich darunter befindlichen Baumwollfaservlies 24 eindringen kann. Ein anderer Teil der Reaktionsmischung 67 verteilt sich auf der Rückseite 47 des Spinnfaservlies oberhalb desselben unter Ausfüllung der Kavität 63 des geschlossenen Schäumwerkzeugs 60. Dabei umfließt bzw. umströmt die Reaktionsmischung 67 die Stifte 71 bzw. Niederhalter 70 unmittelbar. Nach dem Einspritzen bzw. Einbringen der Reaktionsmischung 67 sind die Stifte 71 bzw. Niederhalter 70 von der Reaktionsmischung unmittelbar umströmt bzw. umgeben. Nach dem Aushärten der Reaktionsmischung 67 sind die Stifte 71 bzw. Niederhalter 70 im Wesentlichen vollständig von dem Polyurethan-Weichschaum unmittelbar umschäumt, und zwar an ihrem jeweiligen Außenumfang.

Nach einem im Wesentlichen oder vollständigen Aushärten der Reaktionsmischung 67 kann der fertige Materialaufbau bzw. kann die fertige Verkleidung 20 nach einem Öffnen bzw. im Zuge eines Öffnens des Schäumwerkzeugs 60 entformt werden. Auch in diesem Fall weist der Schaumstoff 34 der als ein Schallabsorber fungierenden zweiten Schicht dann eine Anzahl an Sacklöchern 76 auf, die der Anzahl an Niederhalter-Stiften 71 entsprechen. Auch diese Löcher 76 sind auf der von dem Spinnfaservlies 44 weg weisenden Seite des Schallabsorbers 33 offen. Sie enden andernends an der Rückseite 47 des Spinnfaservlies 44.

Die Erfindung kann auch wie folgt zusammengefasst werden:

Die Erfindung betrifft eine leichte, schallisolierende Verkleidung 20 bzw. einen leichten, schallisolierenden Materialverbund für ein Karosserieteil oder für eine Komponente in einem Motorraum eines Kraftfahrzeugs, mit einer porösen ersten Schicht 21 umfassend einen ersten Schallabsorber 23 und eine mit diesem stoffschlüssig verbundene Schalldämmschicht 27, die stoffschlüssig mit einer Schalldämmschicht 47 verbunden ist, die wiederum stoffschlüssig mit einer zweiten Schicht 32 aus einem zweiten Schallabsorber 33 verbunden ist. Zwischen dem ersten Schallabsorber 23 und dem zweiten Schallabsorber 33 ist eine poröse dritte Schicht 43 aus einem thermoplastischen Spinnvlies 44 angeordnet. Das Schaummaterial 35 des zweiten Schallabsorbers 33 durchdringt das poröse Spinnvlies 44 und durchsetzt in einem sich daran anschließenden Materialbereich 26 der ersten porösen Schicht 21 diese zumindest teilweise, vorzugsweise im Wesentlichen ohne Schaumdurchschlag. Die mit dem Schaummaterial 35 des zweiten Schallabsorbers 33 durchsetzten Materialbereiche des Spinnvlies 44 und der porösen ersten Schicht 21 bilden eine Schalldämmschicht 27 aus. Die Erfindung betrifft auch ein Verfahren zur Herstellung einer derartigen Verkleidung 20 bzw. eines derartigen Materialaufbaus.

### B E Z U G S Z E I C H E N L I S T E

- 20: Verkleidung
- 21: (poröse) erste Schicht
- 22: Schicht
- 23: (erster) Schall- absorber
- 24: Faservlies/Baumwoll- faservlies
- 26: Materialbereich
- 27: Schalldämmschicht
- 28: (Schicht-) Dicke von 27
- 30: (Schicht-) Dicke von 22
- 31: (Schicht-) Dicke
- 32: (poröse) (zweite) Schicht
- 33: (poröser) (zweiter) Schallabsorber/ Schallabsorberschicht
- 34: Schaumstoff/PUR- Weichschaum/Stoff/ Schaumstoffschicht
- 35: (Schaum) Material
- 36: (Schicht-) Dicke von 32
- 43: (poröse) weitere/ dritte Schicht
- 44: (Polypropylen-) Spinnfaservlies/ Spinnvlies
- 45: (Schicht-) Dicke von 44
- 47: Rückseite von 43, 44
- 49: Deckschicht/Abdeck- vlies
- 50: Materialverbund
- 51: (Schicht-) Dicke von 49
- 55: Zuschnitt
- 60: Schäumwerkzeug
- 61: Werkzeugteil/erste Werkzeughälfte/ Unterwerkzeug
- 62: Werkzeugteil/zweite Werkzeughälfte/ Oberwerkzeug
- 63: Kavität
- 64: Bodenfläche von 63
- 65: Oberfläche
- 66: (Einspritz-) Kanal
- 67: Reaktionsmischung/ Reaktionsgemisch
- 68: Einspritzstrahl
- 69: Einspritzkopf/ Einspritzdüse
- 70: Niederhalter
- 71: Stift
- 74: offene Stellung von 60
- 75: geschlossene Stellung von 60
- 76: Loch/Sackloch

## Patentansprüche

1. Leichte, schallisolierende Verkleidung (20) für ein Karosserieteil eines Kraftfahrzeugs, umfassend eine poröse erste Schicht (21), die einen luftdurchlässigen, porösen, ersten Schallabsorber (23) enthält und umfassend eine mit dem ersten Schallabsorber (23) stoffschlüssig verbundene, im Wesentlichen luftdichte, leichte Schalldämmschicht (27), die aus den Ausgangsmaterialien einer zweiten Schicht (32) aus einem zweiten Schallabsorber (33) aus Schaumstoff (34) hergestellt ist, und wobei der zweite Schallabsorber (33) aus Schaumstoff (34) auf der von dem ersten Schallabsorber (23) weg weisenden Seite der Schalldämmschicht (27) angeordnet ist,
**dadurch gekennzeichnet,**
**dass** zwischen dem zweiten Schallabsorber (23) aus Schaumstoff (34) und dem porösen ersten Schallabsorber (23) eine poröse dritte Schicht (43) aus einem aus thermoplastischen Fasern gebildeten Spinnfaservlies (44) angeordnet ist, das stoffschlüssig mit dem zweiten Schallabsorber (33) verbunden ist, und wobei das Schaummaterial (35) des zweiten Schallabsorbers (33) das poröse Spinnfaservlies (44) durchdringt und in einem sich an das Spinnfaservlies (44) auf dessen von dem zweiten Schallabsorber (33) weg weisenden Seite anschließenden Materialbereich (26) der ersten Schicht (21), die poröse erste Schicht (21) im Wesentlichen ohne Schaumdurchschlag durchsetzt, und wobei das Material der porösen ersten Schicht (21) in dem besagten Materialbereich (26), der von dem Schaummaterial (35) des zweiten Schallabsorbers (33) durchsetzt ist und dieses die poröse erste Schicht (21) durchsetzende Schaummaterial (35), die Schalldämmschicht (27) ausbilden.

2. Verkleidung nach Anspruch 1, **dadurch gekennzeichnet, dass** das Material des Spinnfaservlies (44) und das dieses durchdringende Schaummaterial (35) des zweiten Schallabsorbers (33) zusammen mit dem Material der porösen ersten Schicht (21) in dem besagten Materialbereich (26), der von dem Schaummaterial (35) des zweiten Schallabsorbers (33) durchsetzt ist und dieses die poröse erste Schicht (21) durchsetzende Schaummaterial (35) eine gemeinsame Schalldämmschicht (27) ausbilden, und wobei das mit dem Schaummaterial (35) des zweiten Schallabsorbers (33) durchdrungene Spinnfaservlies (44) und das Material des besagten Materialbereichs (26) der porösen ersten Schicht (21), die von dem Schaummaterial (35) des zweiten Schallabsorbers (33) durchsetzt ist, unmittelbar miteinander verbunden sind.

3. Verkleidung nach Anspruch 1 oder 2, **dadurch gekennzeichnet, dass** das Spinnfaservlies (44) bzw. die daraus gebildete Schicht (43) eine Dicke (45) im Bereich von 0,1 bis 3 mm, vorzugsweise im Bereich von 0,1 bis 1 mm, insbesondere von 0,2 bis 0,6 mm, beispielsweise von 0,3 bis 0,4 mm, aufweist.

4. Verkleidung nach einem der Ansprüche 1 bis 3, **dadurch gekennzeichnet, dass** das Spinnfaservlies (44) aus Polypropylenfasern und/oder aus Polyesterfasern besteht.

5. Verkleidung nach einem der Ansprüche 1 bis 4, **dadurch gekennzeichnet, dass** das Spinnfaservlies (44) auf die poröse erste Schicht (21) aufkaschiert, beispielsweise aufgeklebt, insbesondere auf der porösen ersten Schicht (21) thermisch fixiert, ist bzw. wird.

6. Verkleidung nach einem der Ansprüche 1 bis 5, **dadurch gekennzeichnet, dass** das Spinnfaservlies (44) vor dem Einlegen in ein Schäumwerkzeug (60) und/oder vor dem Eindringen des Schaumstoffmaterials (35) des zweiten Schallabsorbers (33) auf die poröse erste Schicht (21) aufkaschiert, insbesondere auf der porösen ersten Schicht (21) thermisch fixiert, ist.

7. Verkleidung nach einem der Ansprüche 1 bis 6, **dadurch gekennzeichnet, dass** die poröse erste Schicht (21), vorzugsweise auch der poröse erste Schallabsorber (23), aus einem Faservlies (24) aus Baumwollfasern oder aus Polyesterfasern oder aus Baumwolle-Polyester-Mischfasern oder aus Mineralfasern, insbesondere aus Glasfasern, gebildet ist oder besteht bzw. gebildet sind oder bestehen.

8. Verfahren zur Herstellung einer leichten, schallisolierenden Verkleidung (20) für ein Karosserieteil eines Kraftfahrzeugs, wobei eine poröse erste Schicht (21) in ein offenes Schäumwerkzeug (60) eingebracht wird, das eine mit einer Bodenfläche (64) begrenzte Kavität (63) enthält, und wobei eine luftdurchlässige, poröse, weitere Schicht (43) auf ihrer Rückseite (47) mit einer Polyol und Isocyanat enthaltenden Reaktionsmischung (67) hinterspritzt wird, und wobei sich aus der Reaktionsmischung (67) eine Schaumstoffschicht ergibt, die eine zweite Schicht (32) aus einem Schallabsorber (33) und eine im Wesentlichen luftdichte, leichte Schalldämmschicht (27) aufweist, die mit der porösen weiteren Schicht (43) unmittelbar und stoffschlüssig verbunden ist,
**dadurch gekennzeichnet,**
**dass** die Reaktionsmischung (67) im Wesentlichen nicht parallel zu der Rückseite (47) der aus einem Spinnfaservlies (44) aus thermoplastischen Fasern bestehenden porösen, weiteren, dritten Schicht (43) auf das Spinnfaservlies (44) aufgespritzt und/oder im Wesentlichen nicht parallel zu der Bodenfläche (64) der Kavität (63) des Schaumwerkzeugs (60) eingespritzt wird, so dass die Reaktionsmischung (67) das poröse Spinnfaservlies (44) durchdringt und auch wenigstens teilweise in die mit dem Spinnfaservlies (44) verbundene poröse erste Schicht (21) eindringt, wobei bzw. wonach sich aus der wenigstens teilweise in die poröse erste Schicht (21) eingedrungenen Reaktionsmischung (67) die im Wesentlichen luftdichte und mit dem Schaumstoffmaterial (35) der zweiten Schicht (32) gebildete Schalldämmschicht (27) ausbildet.

9. Verfahren nach Anspruch 8, **dadurch gekennzeichnet, dass** die Reaktionsmischung (67) im Wesentlichen senkrecht zu der Rückseite (47) des Spinnfaservlies (44) auf die Rückseite (47) des Spinnfaservlies (44) und/oder im Wesentlichen senkrecht zu der Bodenfläche (64) der Kavität (63) des Schaumwerkzeugs (60) auf- bzw. eingespritzt wird.

10. Verfahren nach Anspruch 8 oder 9, **dadurch gekennzeichnet, dass** das Spinnfaservlies (44), vorzugsweise vor dem Einlegen in das Schäumwerkzeug (60), auf die poröse erste Schicht (21) aufkaschiert, beispielsweise aufgeklebt, insbesondere auf der porösen ersten Schicht (21) thermisch fixiert, ist bzw. wird.

11. Verfahren nach einem der Ansprüche 8 bis 10, **dadurch gekennzeichnet, dass** wenigstens ein Werkzeugteil (62), vorzugsweise eine Werkzeughälfte (62), des Schäumwerkzeugs (60) mit Niederhaltern (70) versehen ist, mittels derer das Spinnfaservlies (44), vorzugsweise auch die mit dem Spinnfaservlies (44) versehene poröse erste Schicht (21) oder ein aus dem Spinnfaservlies (44) und der porösen ersten Schicht (21) bestehender poröser Materialverbund (50), beim und/oder nach dem Schließen des Schäumwerkzeuges (60) in der Kavität (63) des Schäumwerkzeugs (60) fixiert und/oder in die Kavität (63) des Schäumwerkzeugs (60) gedrückt wird.

12. Verfahren nach Anspruch 11, **dadurch gekennzeichnet, dass** die Niederhalter (70) fest, insbesondere starr, an dem diese tragenden Werkzeugteil (62) befestigt sind.

13. Verfahren nach einem der Ansprüche 8 bis 12, **dadurch gekennzeichnet, dass** das auf der porösen ersten Schicht (21) aufliegende oder das mit der porösen ersten Schicht (21) stoffschlüssig verbundene Spinnfaservlies (44) an- und/oder ein- und/oder durchgeschnitten wird bzw. ist.

14. Verfahren nach einem der Ansprüche 8 bis 13, **dadurch gekennzeichnet, dass** die die Kavität (63) des Schäumwerkzeuges (60) begrenzenden Oberflächen (64, 65) des Schäumwerkzeuges (60) während des Einbringens bzw. Einspritzens der Reaktionsmischung (67) in die Kavität (63) des Schäumwerkzeuges (60) und bis zum Aushärten zumindest der Schalldämmschicht (27), vorzugsweise bis zum Aushärten der die Schalldämmschicht (27) enthaltenden Schaumstoffschicht (34), eine im Wesentlichen gleiche Temperatur aufweisen bzw. auf einer im Wesentlichen gleich bleibenden Temperatur gehalten werden.

15. Verfahren nach einem der Ansprüche 8 bis 14, **dadurch gekennzeichnet, dass** die Reaktionsmischung (67) unter Ausbildung eines im Wesentlichen nicht aufgefächerten Einspritzstrahls (68) und/oder unter Ausbildung eines im Wesentlichen kompakten Einspritzstrahls (68), vorzugsweise mit Hilfe eines einen derartigen Einspritzstrahl (68) erzeugenden Einspritzkopfes (69), auf das Spinnfaservlies (44) aufgespritzt wird.

## Claims

1. Lightweight acoustically insulating cladding (10) for a bodywork part of a motor vehicle, comprising a porous first layer (21), which includes an air-permeable, porous first sound absorber (23), and a substantially air-tight, lightweight sound insulating layer (27), which is connected with the first sound absorber (23) by material couple and which is produced from the starting materials of a second layer (32) of a second sound absorber (33) of foam material (34), and wherein the second sound absorber (33) of foam material (34) is arranged on the side of the sound insulating layer (27) facing away from the first sound absorber (23), **characterised in that** arranged between the second sound absorber (33) of foam material (34) and the porous first sound absorber (23) is a porous third layer (43) of a staple-fibre non-woven material (44), which is formed from thermoplastic fibres and which is connected with the second sound absorber (33) by material couple, and wherein the foam material (35) of the second sound absorber (33) penetrates the porous staple-fibre non-woven material (44) and in a material region (26) - which adjoins the staple-fibre non-woven material (44) on the side thereof facing away from the second sound absorber (33) - of the first layer (21) enters the porous first layer (21) substantially without piercing the foam, and wherein the material of the porous first layer (21) in the said material region (26), which is entered by the foam material (35) of the second sound absorber (33), and this foam material (35) entering the porous first layer (21) form the sound damping layer (27).

2. Cladding according to claim 1, **characterised in that** the material of the staple-fibre non-woven material (44) and the foam material (35), which enters this, of the second sound absorber (33) together with the material of the porous first layer (21) in the said material region (26), which is entered by the foam material (35) of the second sound absorber (33), and this foam material (35) entering the porous first layer (21) form a common sound damping layer (27), and wherein the staple-fibre non-woven material (44) penetrated by the foam material (35) of the second sound absorber (33) and the material of the said material region (26) of the porous first layer (21), which is entered by the foam material (35) of the second sound absorber (33), are directly connected together.

3. Cladding according to claim 1 or 2, **characterised in that** the staple-fibre non-woven material (44) or the layer (43) formed therefrom has a thickness (45) in the region of 0.1 to 3 millimetres, preferably in the range of 0.1 millimetres to 1 millimetre, particularly from 0.2 to 0.6 millimetres, for example from 0.3 to 0.4 millimetres.

4. Cladding according to any one of claims 1 to 3, **characterised in that** the staple-fibre non-woven material (44) consists of polypropylene fibres and/or polyester fibres.

5. Cladding according to any one of claims 1 to 4, **characterised in that** the staple-fibre non-woven material (44) is laminated, for example glued, on the porous first layer (21), particularly thermally fixed on the porous first layer (21).

6. Cladding according to any one of claims 1 to 5, **characterised in that** the staple-fibre non-woven material (44) before placing in a foaming tool (60) and/or before penetration of the foam material (35) of the second sound absorber (33) is laminated on the porous first layer (21), particularly thermally fixed on the porous first layer (21).

7. Cladding according to any one of claims 1 to 6, **characterised in that** the porous first layer (21) and preferably also the porous first sound absorber (23) is or are formed from or consists or consist of a fibre non-woven material (24) of cotton fibres or polyester fibres or cotton-polyester mixed fibres or mineral fibres, particularly glass fibres.

8. Method of producing a lightweight acoustically-insulating cladding (20) for a bodywork part of a motor vehicle, wherein a porous first layer (21) is introduced into a open foaming tool (60), which has a cavity (63) bounded by a base surface (64), and wherein an air-permeable, porous further layer (43) is injection-moulded on its rear side (47) by a reaction mixture (67) comprising polyalcohol and isocyanate, and wherein resulting from the reaction mixture (67) is a foam material layer which comprises a second layer (32) of a sound absorber (33) and a substantially air-tight, lightweight sound insulating layer (27) which is directly connected with the porous further layer (43) by material couple, **characterised in that** the reaction mixture (67) is injection-moulded onto the staple-fibre non-woven material (44) substantially non-parallelly to the rear side (47) of the porous, further, third layer (43) consisting of a staple-fibre non-woven material (44) of thermoplastic fibres and/or in injection-moulded substantially non-parallelly to the base surface (64) of the cavity (63) of the foaming tool (60), so that the reaction mixture (67) penetrates the porous staple-fibre non-woven material (44) and also at least partly penetrates the porous first layer (21) connected with the staple-fibre non-woven material (44), wherein or whereafter the substantially air-tight sound insulating layer (27) formed by the foam material (35) of the second layer (32) forms from the reaction mixture (67) penetrated at least partly into the porous first layer (21).

9. Method according to claim 8, **characterised in that** the reaction mixture (67) is injection-moulded substantially perpendicularly to the rear side (47) of the staple-fibre non-woven material (44) onto the rear side (47) of the staple-fibre non-woven material (44) and/or injection-moulded in substantially perpendicularly to the base surface (64) of the cavity (63) of the foaming tool (60).

10. Method according to claim 8 or 9, **characterised in that** the staple-fibre non-woven material (44) is laminated, for example glued, on the porous first layer (21), particularly thermally fixed on the porous first layer (21), preferably before placing in the foaming tool (60).

11. Method according to any one of claims 8 to 10, **characterised in that** at least one tool part (62), preferably a tool half (62), of the foaming tool (60) is provided with holding down devices (70), by means of which the staple-fibre non-woven material (44), preferably also the porous first layer (21) provided with the staple-fibre non-woven material (44) or a porous material composite (50) consisting of the staple-fibre non-woven material (44) and the porous first layer (21), is fixed in the cavity (63) of the foaming tool (60) and/or pressed into the cavity (63) of the foaming tool (60) during and/or after closing of the foaming tool (60).

12. Method according to claim 11, **characterised in that** the holding-down devices (70) are fastened firmly, particularly rigidly, to the tool part (62) carrying these.

13. Method according to any one of claims 8 to 12, **characterised in that** the staple-fibre non-woven material (44) resting on the porous first layer (21) or connected with the porous first layer (21) by material couple is cut up and/or cut into and/or cut through.

14. Method according to any one of claims 8 to 13, **characterised in that** the surfaces (64, 65), which bound the cavity (63) of the foaming tool (60), of the foaming tool (60) have substantially the same temperature or are kept to a temperature remaining substantially the same during introduction or injection of the reaction mixture (67) into the cavity (63) of the foaming tool (60) and until hardening at least of the sound insulating layer (27), preferably until hardening of the foam material layer (34) containing the sound insulating layer (27).

15. Method according to any one of claims 8 to 14, **characterised in that** the reaction mixture (67) is injection-moulded onto the staple-fibre non-woven material (44) with formation of a substantially unfanned injection jet (68) and/or with formation of a substantially compact injection jet (68) preferably with the help of an injection head (69) producing an injection jet (68) of that kind.

## Revendications

1. Carénage léger insonorisé (20) pour une partie de carrosserie d'un véhicule à moteur, comprenant une première couche poreuse (21), qui contient un premier absorbeur de bruit perméable à l'air (23) et comprenant une couche d'isolation sonore légère (27) globalement étanche à l'air et reliée par liaison de matière au premier absorbeur de bruit (21), constituée des matériaux de départ d'une deuxième couche (32), elle-même constituée d'un deuxième absorbeur de bruit (33) en matériau alvéolaire (34) et moyennant quoi le deuxième absorbeur de bruit (33) en matériau alvéolaire (34) est disposé sur le côté de la couche d'isolation sonore (27) opposée au premier absorbeur de bruit (23), **caractérisé en ce que**, entre le deuxième absorbeur de bruit (23) en matériau alvéolaire (34) et le premier absorbeur de bruit poreux (23) se trouve une troisième couche poreuse (43) constituée d'un non-tissé en fibres thermoplastiques (44) relié par liaison de matière avec le deuxième absorbeur de bruit (33), et moyennant quoi le matériau alvéolaire (35) du deuxième absorbeur de bruit (33) pénètre dans le non-tissé poreux (44) et traverse, dans une zone du matériau (26) de la première couche poreuse (21) reliée au non-tissé (44), sur son côté opposé au deuxième absorbeur de bruit (33), la première couche poreuse (21) globalement sans perforation du matériau alvéolaire et moyennant quoi le matériau de la première couche poreuse (21), dans ladite zone de matériau (26), qui est traversé par le matériau alvéolaire (35) du deuxième absorbeur de bruit (33) et ce matériau alvéolaire (35) traversant la première couche poreuse (21), constituent la couche d'isolation sonore (27).

2. Carénage selon la revendication 1, **caractérisé en ce que** le matériau du non-tissé (44) et le matériau alvéolaire (35) du deuxième absorbeur de bruit (33), qui le pénètre, constituent, avec le matériau de la première couche poreuse (21), dans ladite zone de matériau (26), traversée par le matériau alvéolaire (35) du deuxième absorbeur de bruit (33) et ce matériau alvéolaire (35) traversant la première couche poreuse (21), une couche d'isolation sonore (27) commune, et moyennant quoi le non-tissé (44) pénétré par le matériau alvéolaire (35) du deuxième absorbeur de bruit (33) et le matériau de ladite zone de matériau (26) de la première couche poreuse (21), qui est traversée par le matériau alvéolaire (35) du deuxième absorbeur de bruit (33), sont reliés directement entre eux.

3. Carénage selon la revendication 1 ou 2, **caractérisé en ce que** le non-tissé (44) ou la couche constituée par celui-ci présente une épaisseur (45) de l'ordre de 0,1 à 3 mm, de préférence de l'ordre de 0,1 à 1 mm, plus particulièrement de 0,2 à 0,6 mm, par exemple de 0,3 à 0,4 mm.

4. Carénage selon l'une des revendications 1 à 3, **caractérisé en ce que** le non-tissé (44) est constitué de fibres de polypropylène et/ou de fibres de polyester.

5. Carénage selon l'une des revendications 1 à 4, **caractérisé en ce que** le non-tissé (44) est contrecollée sur la première couche poreuse (27), par exemple collée, plus particulièrement fixée thermiquement sur la première couche poreuse (21).

6. Carénage selon l'une des revendications 1 à 5, **caractérisé en ce que** le non-tissé (44) est fixé sur la première couche poreuse (21), plus particulièrement fixé thermiquement sur la première couche poreuse (21), avant l'insertion dans un outil de moussage (60) et/ou avant la pénétration du matériau alvéolaire (35) du deuxième absorbeur de bruit (33), plus particulièrement fixé thermiquement sur la première couche poreuse (21).

7. Carénage selon l'une des revendications 1 à 6, **caractérisé en ce que** la première couche poreuse (21), de préférence également le premier absorbeur de bruit poreux (23), est constitué d'un non-tissé (24) en fibres de coton ou en fibres de polyester ou en un mélange de fibres coton-polyester ou en fibres minérales, plus particulièrement en fibres de verre.

8. Procédé de fabrication d'un carénage insonorisé léger (20) pour une partie de carrosserie d'un véhicule à moteur, moyennant quoi une première couche poreuse (21) est insérée dans un outil de moussage ouvert (60), qui contient une cavité (63) délimitée par une surface de fond (64) et moyennant quoi une couche supplémentaire poreuse et perméable à l'air (43) est injectée, sur son côté arrière, avec un mélange de réaction (67) contenant du polyol et de l'isocyanate, et moyennant quoi, à partir du mélange de réaction (67), une couche de matériau alvéolaire se forme, qui présente une deuxième couche (32) constituée d'un absorbeur de bruit (33) et une couche d'isolation sonore (27) légère et globalement étanche à l'air, reliée directement et avec une liaison de matière avec la couche poreuse supplémentaire (43), **caractérisé en ce que** le mélange de réaction (67) est injecté sur le non-tissé (44) de manière globalement non parallèle au côté arrière (47) de la troisième couche supplémentaire poreuse et constitué de fibres thermoplastiques (43) et/ou de manière globalement non parallèle à la surface de fond (64) de la cavité (63) de l'outil de moussage (67), de façon à ce que le mélange de réaction (67) pénètre dans le non-tissé poreux (44) et également au moins partiellement dans la première couche poreuse (21) reliée avec le non-tissé (44), moyennant quoi ou après quoi, à partir du mélange de réaction (67) ayant pénétré au moins partiellement dans la première couche poreuse (21), se forme la couche d'isolation sonore (27) globalement étanche à l'air et formé du deuxième matériau alvéolaire (35) de la deuxième couche (32).

9. Procédé selon la revendication 8, **caractérisé en ce que** le mélange de réaction (67) est injecté de manière globalement perpendiculaire au côté arrière (47) du non-tissé (44) sur le côté arrière (47) du non-tissé (44) et/ou de manière globalement perpendiculaire à la surface de fond (64) de la cavité (63) de l'outil de moussage (60).

10. Procédé selon la revendication 8 ou 9, **caractérisé en ce que** le non-tissé (44), de préférence avant l'insertion dans l'outil de moussage (60) est contrecollé sur la première couche poreuse (21), par exemple collée, plus particulièrement fixée thermiquement sur la première couche poreuse (21).

11. Procédé selon l'une des revendications 8 à 10, **caractérisé en ce que**, au moins une partie d'outil (62), de préférence une moitié d'outil (62), de l'outil de moussage (60) est muni de serre-flancs (70) à l'aide desquels le non-tissé (44), de préférence également la première couche poreuse (21) munie du non-tissé (44), ou un matériau composite poreux (50) constitué du non-tissé (44) et de la première couche poreuse (21) est fixée dans la cavité (63) de l'outil de moussage (60) et/ou pressé dans la cavité (63) de l'outil de moussage (60) lors de la fermeture et/ou après la fermeture de l'outil de moussage (60).

12. Procédé selon la revendication 11, **caractérisé en ce que** les serre-flancs (70) sont fixés de manière ferme, plus particulièrement rigide à cette partie de l'outil (62) comportant ceux-ci.

13. Procédé selon l'une des revendications 8 à 12, **caractérisé en ce que** le non-tissé (44) posé sur la première couche poreuse (21) ou relié avec une liaison de matière avec la première couche poreuse (21) est incisé et/ou découpé et/ou coupé.

14. Procédé selon l'une des revendications 8 à 13, **caractérisé en ce que** les surfaces (64, 65) délimitant la cavité (63) de l'outil de moussage (60) présentent une température globalement constante ou sont maintenues à une température globalement constante pendant l'introduction ou l'injection du mélange de réaction (67) dans la cavité (63) de l'outil de moussage (60) et jusqu'au durcissement au moins de la couche d'isolation sonore (27), de préférence jusqu'au durcissement de la couche de matériau alvéolaire (34) contenant la couche d'isolation sonore (27).

15. Procédé selon l'une des revendications 8 à 14, **caractérisé en ce que** le mélange de réaction (67) est injecté sur le non-tissé (44) en formant un jet d'injection (68) globalement non divisé et/ou en formant un jet d'injection (68) globalement compact, de préférence à l'aide d'une tête d'injection (69) produisant un tel jet d'injection (68).
